(19) Europäisches Patentamt

European Patent Office

Office européen des brevets

(11) EP 1 122 939 A2

(12) **EUROPEAN PATENT APPLICATION**

(43) Date of publication:
08.08.2001 Bulletin 2001/32

(51) Int Cl.⁷: $H04N\ 1/00$

(21) Application number: 01300633.3

(22) Date of filing: 24.01.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **31.01.2000 JP 2000022285
31.01.2000 JP 2000022962**

(71) Applicant: **CANON KABUSHIKI KAISHA
Tokyo (JP)**

(72) Inventors:
• **Suzuki, Takashi c/o Canon Kabushiki Kaisha
Tokyo (JP)**
• **Ohara, Eiji c/o Canon Kabushiki Kaisha
Tokyo (JP)**

(74) Representative:
**Beresford, Keith Denis Lewis et al
BERESFORD & Co.
High Holborn
2-5 Warwick Court
London WC1R 5DJ (GB)**

(54) **Image processing system**

(57) It is an object of this invention to provide an image processing system capable of detecting at a high speed whether copy-protected information is embedded in image data. For this purpose, the image processing system that practices this invention uses image data having a low resolution in detecting the embedded position of the copy-protected information. When the position is detected, the neighboring image is extracted in units of blocks on the basis of the pattern size and compared with the pattern image. If a specific pattern is detected as the result of comparison, the image is regarded as an original to be copy-protected, and appropriate processing is executed.

**F I G. 14**

EXTRACTION OF
DIGITAL WATERMARK

SEGMENT LOW-RESOLUTION
IMAGE DATA INTO BLOCKS — S1401

CONVERT EACH BLOCK INTO
SPACE FREQUENCY DOMAIN — S1403

DETECT REGISTRATION SIGNAL — S1405

DETERMINE POSITION AND
SIZE OF DIGITAL WATERMARK — S1407

EXTRACT TILE (PACKET) FROM
HIGH-RESOLUTION IMAGE DATA ON
THE BASIS OF DETERMINED POSITION
AND SIZE OF DIGITAL WATERMARK — S1409

EXTRACT DIGITAL WATERMARK FROM
IMAGE CONTAINED IN EXTRACTED TILE
(PACKET) — S1411

END

EP 1 122 939 A2

**Description**

FIELD OF THE INVENTION

The present invention relates to an image processing system for determining whether an input image is a specific image and controlling input/output of the image data in accordance with the determination result and, more particularly, to an image processing system for reading an image and determining that the image is a specific image on the basis of the characteristic feature of the read image or a digital watermark embedded in the image.

BACKGROUND OF THE INVENTION

As the performance of a color image reading apparatus (to be referred to as a color scanner hereinafter) using a CCD or a color printer improves in recent years, there is a higher possibility that someone copies an original such as a bank note or securities as a target to be copy-protected by reading the original by a color scanner and outputting it to a color printer. To prevent copy of such a target to be copy-protected, a color copying machine which combines a color scanner and color printer often incorporates a forgery prevention apparatus for recognizing an original to be copy-protected and inhibiting copy or processing the output image.

Such forgery prevention apparatuses mainly use two methods to recognize an original to be copy-protected.

In the first method, digital watermark information is inserted in advance into a specific original which is to be copy-protected. When the digital watermark information is extracted from the original image read in copying, it is determined in accordance with the digital watermark information whether the original is an original to be copy-protected.

In the second method, an original image which is to be copy-protected or part thereof is defined as a specific original, and its feature data is held on the forgery prevention apparatus side in advance. When an original is copied, the feature data is compared with the characteristic feature of the input image signal, thereby determining whether the copied original is a specific original.

If it is determined by one of the methods that the original is a specific original, the output is stopped, or the image is processed.

In either method, however, the forgery prevention apparatus used in a color copying machine or the like operates only in copy operation. For this reason, when an image is read by the scanner and printed separately, even an original to be copy-protected can be easily copied. That is, when an original to be copy-protected is temporarily read by a color scanner, and the result is output by a color copying machine or color printer through a controller, the original to be copy-protected is easily forged.

To prevent this, a copy inhibition control method may be used in which whether an original is an original to be copy-protected is determined from image data stored in a memory after scanning or image data for printing, and if so, the image data is changed. However, when the entire image data stored in the memory is processed without any pre-processing, the scanning and printing time becomes long.

In recent years, there are various kinds of originals such as a bank note or securities that should not be copied. The forgery prevention apparatus must accurately determine that a copy target original is one of the number of originals to be copy-protected without any determination error. For this purpose, the forgery prevention apparatus must repeatedly determine, for each original to be copy-protected, whether the read image matches an original to be copy-protected, so a long time is required to determine an original to be copy-protected. As a result, productivity of copy processing considerably degrades.

If the determination processing time is shortened to improve the productivity, the determinable types of specific originals are limited, and the number of determination errors increases.

SUMMARY OF THE INVENTION

The present invention has been made to address the problem of the prior art, and has as its object to provide an image processing system capable of detecting whether image data is image data of an original to be copy-protected at a high speed.

It is another object of the present invention to provide an image processing system capable of reducing the load of specific original determination processing in forgery prevention and also reliably preventing forgery.

An embodiment of the present invention provides an image processing apparatus characterized by comprising:

　　determination means for determining whether image data contains specific information for at least one block extracted from the image data; and
　　image processing means for executing predetermined processing for the image data which is determined by the determination means to contain the specific information.

An embodiment of the present invention provides an image processing method characterized by comprising:

　　the determination step of determining whether image data contains specific information for at least one block extracted from the image data; and
　　the image processing step of executing predetermined processing for the image data which is determined in the determination step to contain the specific information.

An embodiment of the present invention provides a computer program executed by a computer to perform image processing, characterized by comprising:

a program code of the determination step of determining whether image data contains specific information for at least one block extracted from the image data; and
a program code of the image processing step of executing predetermined processing for the image data which is determined in the determination step to contain the specific information.

Other features and advantages of embodiments will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute a part of the specification, illustrate embodiments of the invention.

Fig. 1 is a block diagram showing the arrangement of an image processing system according to an embodiment of the present invention;
Fig. 2 is an explanatory view of image data processed by the image processing system shown in Fig. 1;
Fig. 3 is an explanatory view of an image packet format processed by the image processing system shown in Fig. 1;
Fig. 4 is an explanatory view of image packet formats processed by the image processing system shown in Fig. 1;
Fig. 5 is an explanatory view of a command packet format processed by the image processing system shown in Fig. 1;
Fig. 6 is an explanatory view of the command packet format processed by the image processing system shown in Fig. 1;
Fig. 7 is a flow chart showing an outline of copy processing in the image processing system according to the present invention;
Figs. 8A and 8B are views showing forgery prevention processing in the image processing system according to the present invention;
Fig. 9 is a graph showing the principle of forgery prevention processing for image data in the RGB color space;
Fig. 10 is a view showing a warning dialogue presented when an image is determined as an image to be copy-protected;
Fig. 11 is a view showing log information stored when an image to be copy-protected is detected;
Fig. 12 is a flow chart showing a detailed example of forgery prevention control processing in Fig. 7;
Fig. 13 is a graph showing the principle of forgery prevention processing for image data in the YMCK color space;
Fig. 14 is a flow chart showing digital watermark extraction processing;
Fig. 15 is a block diagram showing the arrangement of an image input/output processing apparatus according to the third embodiment;
Fig. 16 is a flow chart for explaining a processing program executed by the image input/output processing apparatus according to the third embodiment;
Fig. 17 is a block diagram showing the arrangement of the determination circuit of the image input/output processing apparatus according to the -third embodiment;
Fig. 18 is a flow chart for explaining a processing program executed by an image input/output processing apparatus according to the fourth embodiment;
Fig. 19 is a view showing the arrangement of a color copying machine according to the fifth embodiment;
Fig. 20 is a view of an inkjet printing apparatus according to the fifth embodiment;
Fig. 21 is a block diagram showing an arrangement for executing control of the inkjet printing apparatus according to the fifth embodiment;
Fig. 22 is a block diagram showing the arrangement of an information processing apparatus according to the sixth embodiment;
Fig. 23 is a flow chart for explaining a processing program executed by an image input/output processing apparatus according to a modification of the third embodiment;
Fig. 24 is a flow chart for explaining a processing program executed by an image input/output processing apparatus according to a modification of the fourth embodiment; and
Fig. 25 is a flow chart for explaining determination processing in step S208 executed by the image input/output processing apparatus.

DETAILED DESCRIPTION OF THE PREFERRED EMBODIMENTS

(First Embodiment)

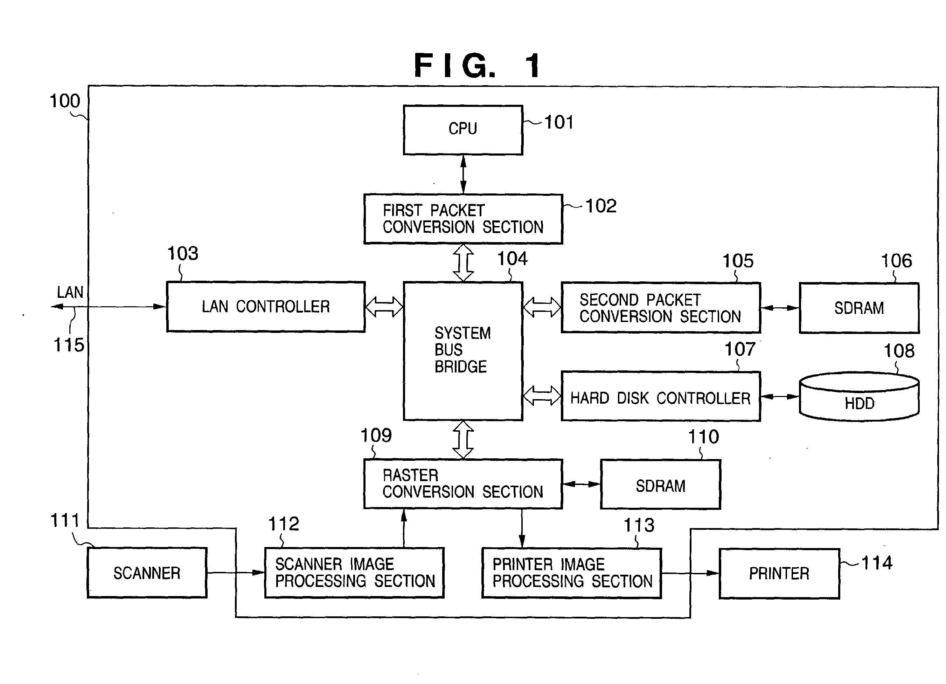

Fig. 1 is a block diagram showing an image processing system according to an embodiment of the present invention. In the following embodiment, a pattern used as a digital watermark and an embedding method therefor are recognized by the system in advance.

The image processing system of this embodiment comprises an information processing apparatus 100, and a scanner 111 and printer 114 that are connected to the information processing apparatus 100. In this system, an original image read by the scanner 111 can be copied by printing it by the printer 114. Additionally, an image sent through a LAN 115 such as 10 Base-T can be printed by the printer 114, or conversely, an image read by the printer 114 can be sent, through the LAN 115, to another information processing apparatus connected to the LAN 115.

The scanner 111 is, e.g., a color scanner, which scans an original placed on an original table with a lamp (not shown), focuses reflected light to a CCD line sensor, and converts (photoelectrically converts) the optical signal into an electrical signal. The signal is digitized and read by a scanner image processing section 112 as a digital image signal. The image signal is constructed by pixels. Each pixel includes a plurality of color components, e.g., R, G, and B components. Each color component included in one pixel is formed from multilevel data of 8 to 12 bits.

A CPU 101 is formed by, e.g., a high-speed RISCCPU and controls the scanner 111 and printer 114 of the system, and the information processing apparatus 100. Control and image data exchange between the CPU 101 and blocks in the information processing apparatus 100 through an SBB 104 are done by exchanging data having a packet structure (packet data). The thick hollow arrows in Fig. 1 indicate packet data flows. For this purpose, each of first and second packet conversion sections 102 and 105, LAN controller 103, HDD controller 107, and raster conversion section 109 has a packet assembling/deassembling function.

The image processing system of this embodiment also has user interfaces not shown in Fig. 1, such as operation panel and display device.

(Relationship Between Packet Data and Image)

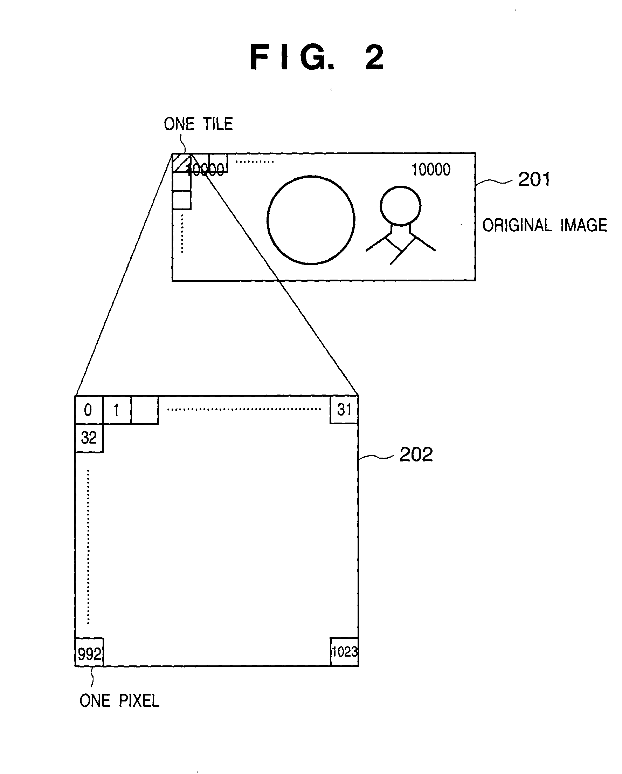

The relationship between packet data and an image in this embodiment will be described next with reference to Fig. 2.

Referring to Fig. 2, an original image 201 is segmented into a plurality of tiles. The hatched portion at the upper left corner of the original image 201 represents one tile having a size of 32 pixels x 32 pixels. The image data block corresponding to one tile is defined as a unit of image data stored in one packet (to be described later).

Fig. 2 shows the structure of a tile 202 segmented from the image 201. Numbers 0 to 1023 are sequentially defined for the pixels.

(Packet Format)

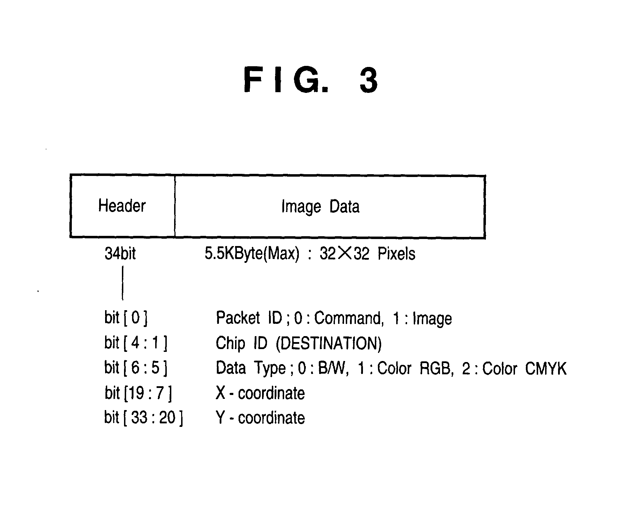

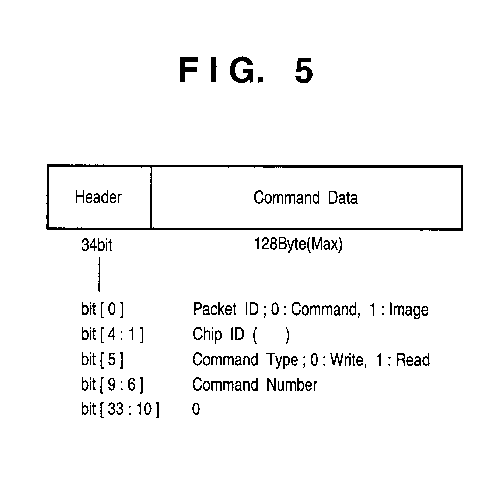

Figs. 3 and 5 show the data format of a packet used in this embodiment. The system of this embodiment uses two packets: an image packet shown in Fig. 3 and a command packet shown in Fig. 5. Either packet is formed by a Header field having a fixed length of 34 bits and a Data field having a variable length. Discrimination between the command packet and the image packet is done by the value of the first bit (bit[0]) of the Header field.

For an image packet, the 34-bit Header field is defined as shown in Fig. 3. Bit[4:1] is an ID code representing the destination of the packet. Bit[6:5] is a color information bit representing the color of image data contained in the data field. This bit represents one of monochrome, RGB color, and CMYK format. The remaining bits represent the X- and Y-coordinates of the start of the image data contained in this packet (for example, the bits represent the upper left position of the tile).

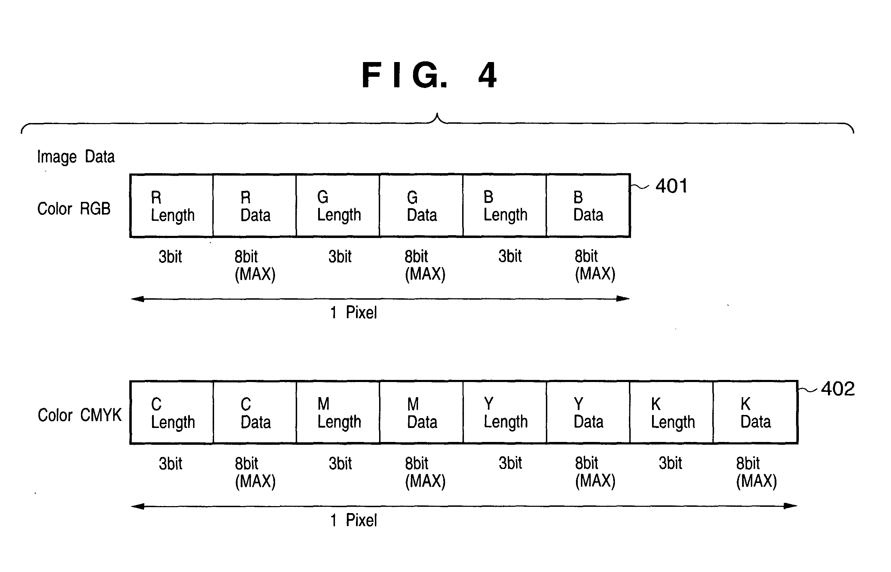

The Data (Image Data field) field of the image data packet has a structure shown in Fig. 4 and has a 5.5-Kbyte length at maximum. An image data field 401 shown in Fig. 4 represents image data having the RGB (Blue, Green, and Red) format, and an image data field 402 represents image data having the CMYK (Cyan, Magenta, Yellow, and Black) format. In this embodiment, since image data is compressed by JPEG, and the data length is variable, 3 bits representing a data length are prepared for each color.

The Header field of a command packet is defined as shown in Fig. 5. Bit[4:0] of the Header field is the same as in the image packet, and bit[5] represents whether the command is a Read or Write of the CPU. In a Read, first, a forward packet for the Read is output from the first packet conversion section 102 to the system bus bridge (SBB) 104, and a backward packet as the Read result returns to the first packet conversion section 102 through the SBB 104. Sixteen commands can be sent in one packet at maximum. The number of commands contained in a packet is defined by bit[9:6] of the Header field as Command Number.

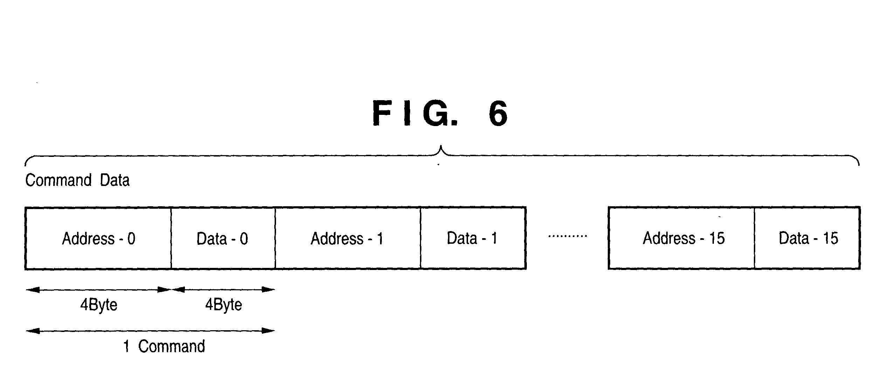

The Data (Command Data field) field of the command packet has a length of 128 bytes at maximum and has a structure shown in Fig. 6. More specifically, one command is formed from a 4-byte address and 4-byte data, and commands are sequentially arranged from command 0 to command 15. However, a forward command packet has only an address and no data.

(Data Flow in Copying)

The data flow when an image read by the scanner 111 is copied by the printer 114 will be described next. Image data read by the scanner 111 is raster data, which is processed by the scanner image processing section 112.

The data processed by the scanner image processing section 112 is JPEG-compressed by the raster conversion section 109 and converted into the above-described image packet. At this time, the destination of the packet is set not to the printer 114 but to an SDRAM 106. The image packet is sent to the system bus bridge (SBB) 104.

The SBB 104 sends the received packet data to the destination defined in the packet data. Since the destination is set to the SDRAM 106, the packet data is written from the SBB 104 to the SDRAM 106 through the second packet conversion section 105.

In double-side copying, when image data of one page are written in the SDRAM 106, the image data are transferred to a hard disk drive (to be referred to as an HDD hereinafter) 108 through the SBB 104 and hard disk controller 107.

After the image of one page is written in the SDRAM 106, the image data are sequentially read out from the SDRAM 106 and sent to the raster conversion section 109 through the SBB 104. This data transfer is performed by the SBB 104 in accordance with a command sent from the CPU 101 to the SBB 104 through the first packet conversion section 102.

The raster conversion section 109 expands the image data JPEG-compressed and stored in the Data field of the received image packet, converts the image data into raster data using an SDRAM 110, and outputs the data to a printer image processing section 113.

The image data processed by the printer image processing section 113 is sent to the printer 114 and printed on a paper sheet.

(Data Flow in Printing)

The data flow when image data sent via the LAN 115 is printed by the printer 114 will be described next.

Image data sent via the LAN 115 is converted into an image packet whose destination is set to the SDRAM 106 by the LAN controller 103 and written in the SDRAM 106 through the SBB 104 and packet conversion section 105.

When image data of one page are written in the SDRAM 106, the image data are sequentially transferred to the hard disk drive (to be referred to as an HDD hereinafter) 108 through the SBB 104 and hard disk controller 107. With this processing, when paper jam occurs in the printer 114 during printing, printing can be automatically resumed from the unprinted portion after the paper jam is removed.

When images of one page are completely written in the SDRAM 106 and backed up in the HDD 108, the image data are sequentially read out from the SDRAM 106 and sent to the raster conversion section 109 through the packet conversion section 105 and SBB 104. This data transfer is performed by the SBB 104 in accordance with a command sent from the CPU 101 to the SBB 104 through the packet conversion section 102.

The raster conversion section 109 expands the image data JPEG-compressed and stored in the Data field of the received image packet, converts the image data into raster data using the SDRAM 110, and outputs the data to the printer image processing section 113.

The image data processed by the printer image processing section 113 is sent to the printer 114 and printed on a paper sheet.

(Digital Watermark Extraction Flow)

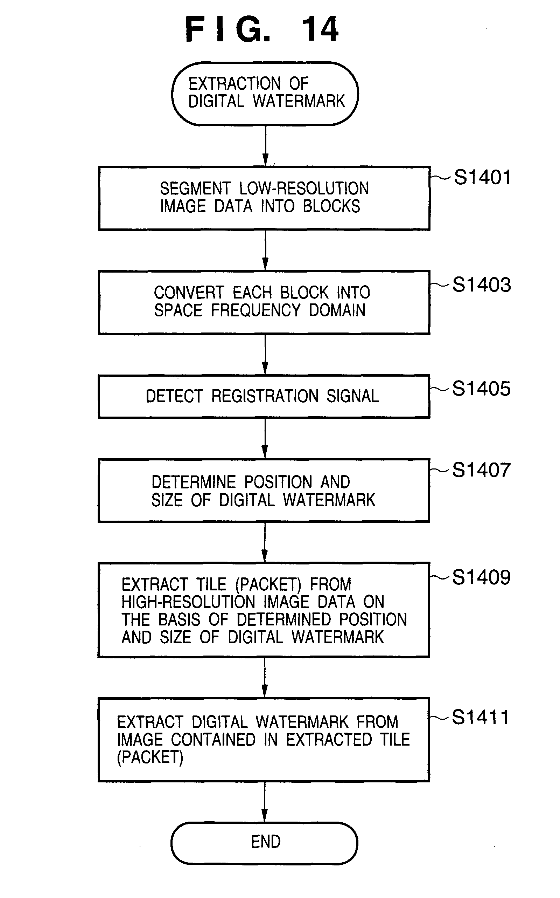

The system of this embodiment has a determination function of determining whether read data or print data is an original to be copy-protected for forgery prevention. For forgery prevention, in this embodiment, a watermark which can be extracted by image processing and is invisibly embedded in an original image in advance is extracted. On the basis of the watermark, it is determined whether the image is an original to be copy-protected. The digital watermark extraction procedure will be described below with reference to Fig. 14. This procedure and the determination function for the original to be copy-protected are executed by the CPU 101.

Information representing the position where a digital watermark is embedded can easily be detected even in low-resolution image data. Hence, after the position information is detected in advance in low-resolution image data whose pixels are thinned (e.g., data in which one pixel is thinned every two pixels), an image specified by the position information is extracted from high-resolution image data before pixel thinning, thereby detecting the digital watermark.

First, a low-resolution image is prepared on the SDRAM 106 by, e.g., thinning pixels from an original image. The low-resolution image data is segmented into blocks (step S1401). Fourier transformation is performed for each block to extract a frequency component (step S1403). Each block is formed by an integral number of packet units each having 32 pixels x 32 pixels. When processing is executed using the packets as a unit, high-speed processing is possible because the processing unit equals the data transfer unit in the system.

The image data in the frequency domain, which is obtained by frequency component extraction processing, is separated into an amplitude spectrum and a phase spectrum. A registration signal contained in the amplitude spectrum is detected (step S1405).

This registration signal is embedded by an impulse signal to a frequency at an intermediate level more than a first frequency level that can hardly be recognized by the human eye and less than a second frequency level that is not removed by irreversible compression/expansion in consideration of such problems for low- and high-frequency components that when a signal is embedded in a low-frequency component, the signal is readily recognized as noise because of the human visual characteristics, unlike a signal embedded in a high-frequency component, and an irreversible compression/expansion scheme such as JPEG compression has a low-pass filter effect, and therefore, a high-frequency component is removed by compression/expansion processing.

To detect the registration signal, an impulse signal in the frequency domain at the above-described intermediate level contained in the amplitude spectrum is extracted.

The scaling ratio of the digital image data is calculated from the coordinates of the extracted impulse signal. In this embodiment, assume that the CPU 101 recognizes in advance which frequency component in the detection target image before scaling has an impulse signal.

The scaling ratio can be calculated from the ratio of the frequency recognized in advance to the frequency for which an impulse signal is detected. For example, let $a$ be the frequency recognized in advance, and b be the frequency of the detected impulse signal. Then, it can be known in reading that scaling at a ratio a/b has been performed. This is a known nature of the Fourier transform.

The position and size of a pattern for detecting the digital watermark contained in the digital image data are determined on the basis of the scaling ratio (step S1407).

The pattern specified with the position and size determined in step S1407 is extracted from high-resolution image data before pixel thinning (step S1409). The digital watermark contained in the digital image data is extracted by convolution which uses the pattern (step S1411).

As the size of the image extracted in step S1409, the image is extracted from the center of the specific position as a unit of an integral number of packets each having 32 pixels × 32 pixels. For example, assume that the size of an embedded digital watermark is defined as a standard in advance for image data obtained by reading a bank note. If the size is 10 mm × 10 mm, and the image has a resolution of 600 dpi, 32 pixels correspond to about 1.4 mm. Hence, 15 tiles each having 32 pixels × 32 pixels are extracted with a margin.

This makes it possible to minimize the image to be processed and also increase the processing speed because an image is processed using the packets as a unit.

The digital watermark can be added to any component of the digital image data. In this embodiment, the digital watermark is added to a blue component to which the human eye is least sensitive. In this case, the above pattern detection is performed for the blue component.

When a digital watermark is embedded in digital image data not by adding it to a visible color component of the digital image data but by embedding information into a specific frequency component, the digital watermark detection processing may be executed for the specific frequency after computing the Fourier transform of the digital image data.

In addition, the position and size of the watermark can also be detected using a high-resolution image before pixel thinning.

(Forgery Prevention Determination Flow)

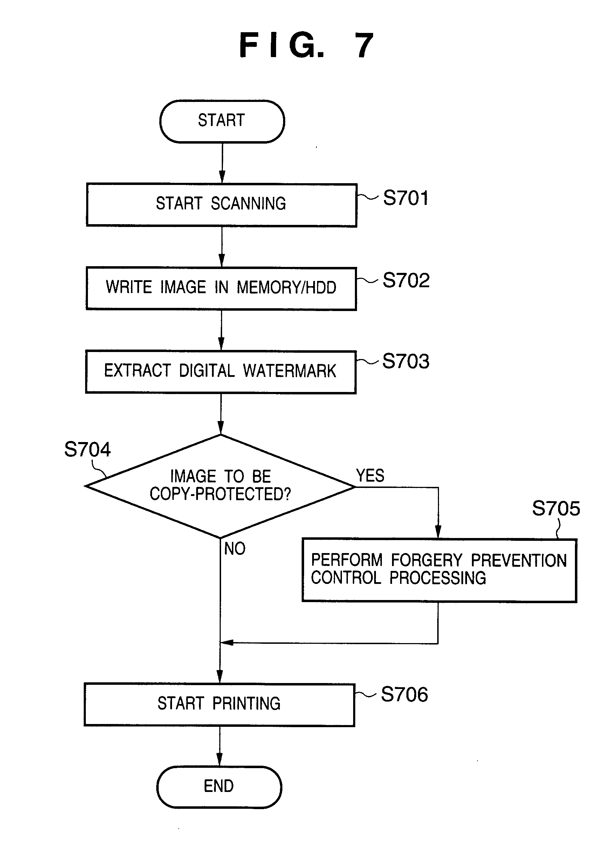

The forgery prevention determination processing flow in copying will be described with reference to Fig. 7.

In step S701, the CPU 101 instructs the scanner 111 to start scanning. When image data is written in the SDRAM 106 in step S702, the CPU 101 reads the data on the SDRAM 106 and executes the above-described digital watermark extraction processing in step S703.

It is determined in step S704 whether the image is an image to be copy-protected on the basis of the information of the digital watermark extracted in step S703. If YES in step S704, forgery prevention control processing (to be described later) is executed in step S705, the printer is activated in step S706, and the flow advances to the printing start sequence. If NO in step S704, the flow immediately advances to step S706 to execute the printing start sequence.

(Forgery Prevention Control Processing)

The forgery prevention control processing in step S705 shown in Fig. 5 will be described in detail.

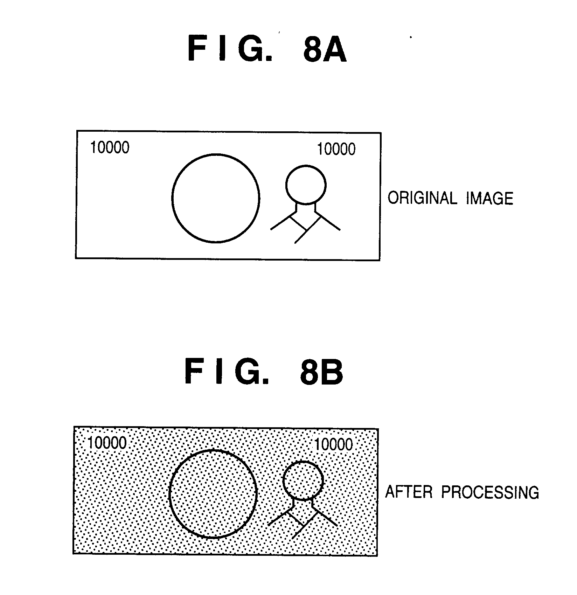

Figs. 8A and 8B are views showing an image output from the printer after forgery prevention processing. Figs. 8A and 8B show an example of prevention processing for a bank note for which copying is inhibited. Fig. 8A shows an original image read from the scanner 111, and Fig. 8B shows an output image after forgery prevention processing.

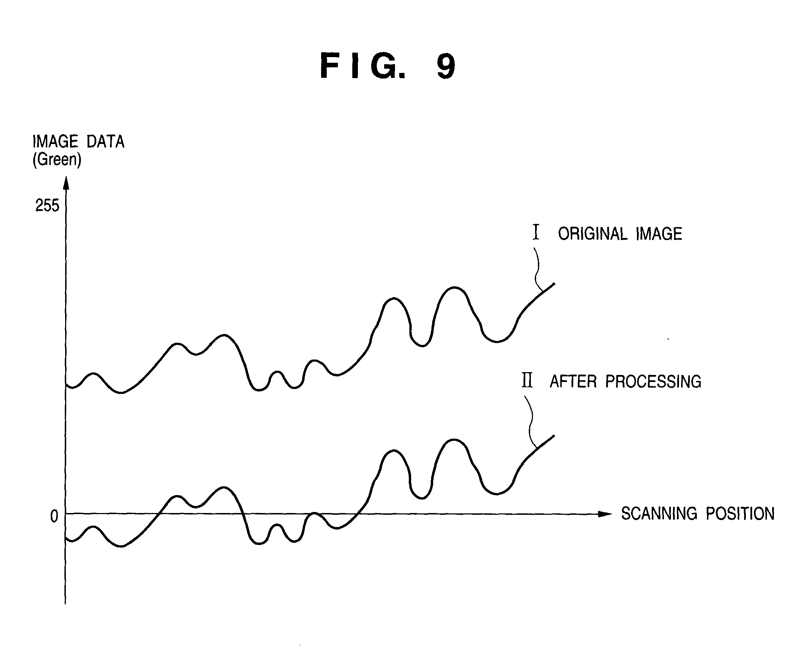

Fig. 9 is a graph showing the characteristic of the image shown in Fig. 8B, which has undergone the forgery prevention processing. The ordinate represents image data G (Green), and the abscissa represents the scanning position.

Referring to Fig. 9, I represents original image data (image in Fig. 8A), and II represents image data after processing (image in Fig. 8B). Referring to Fig. 9, the Green data of part of the image is plotted along the ordinate, and the main scanning position of the image is plotted along the abscissa. The ordinates represents that the image data has 256 grayscale levels from 0 to 255. As the grayscale level becomes close to 255, the image becomes bright.

The original image data I represents an original image before processing, which is stored in the SDRAM 106. When all pixel values of this image data are decreased by a predetermined value, the image data II is generated. In the image data II, all data equal to or smaller than "0" become "0", so the information of the change in image is lost. When this processing is also executed for Red and Blue data except the Green data, the image shown in Fig. 8B is generated as an output image candidate. This processing is performed when the packet conversion section 105 rewrites the contents in the SDRAM 106 at a high speed in accordance with the instruction of a command packet from the CPU 101.

In this embodiment, the processed image cannot be returned to the image before processing.

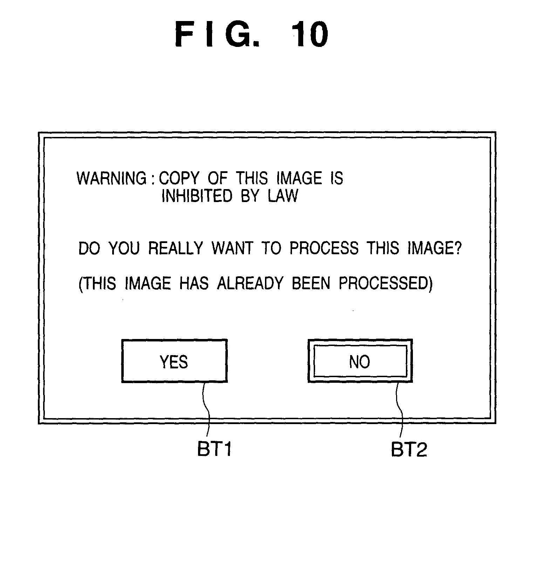

Fig. 10 is a view showing a window displayed on the user interface of the system according to this embodiment. The window shown in Fig. 10 corresponds to a warning window displayed for the user when image data read from the scanner 111 is recognized as image to be copy-protected data.

Referring to Fig. 10, the user selects a button BT1 to output the image in accordance with the displayed warning by approving its contents. The user selects a button BT2 to avoid image output in accordance with the displayed warning by approving its contents.

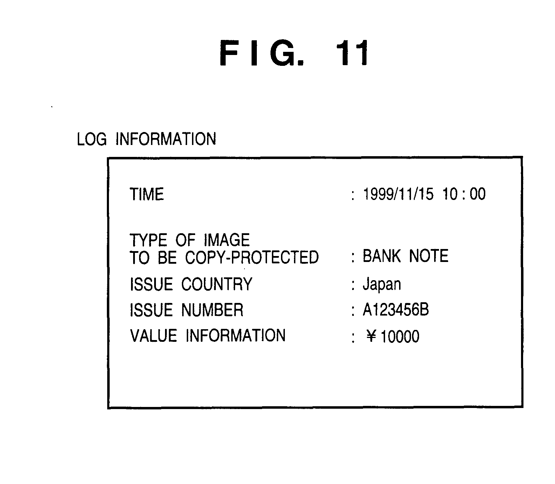

Fig. 11 is a view showing log information stored in the HDD 108 shown in Fig. 1. This information is constructed by pieces of information of the type, issue country, issue number, and value of the image to be copy-protected. These pieces of information can be generated in forgery prevention control processing shown in step S705 of Fig. 7 by image processing for the read image and from the information of the targets to be copy-protected stored in advance.

(Forgery Prevention Control Processing Flow)

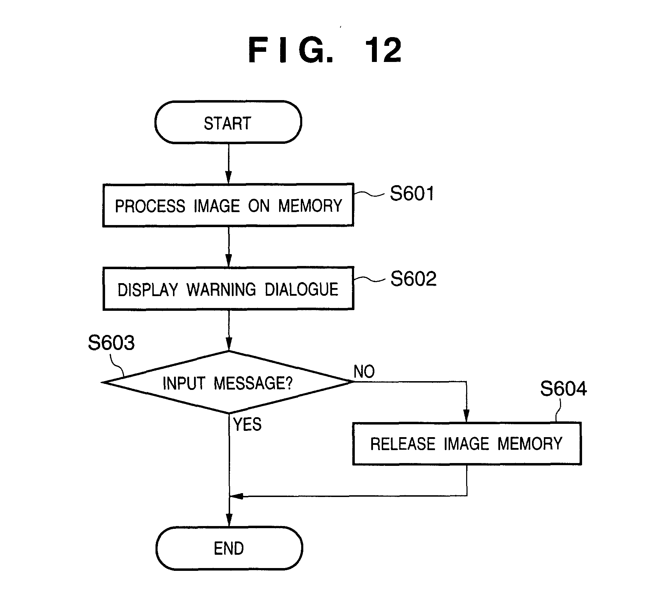

Forgery prevention control processing will be described below in detail with reference to the flow chart shown in Fig. 12. Fig. 12 is a flow chart showing forgery prevention processing in the image processing system according to this embodiment. This corresponds to forgery prevention control processing in step S705 shown in Fig. 7.

First, image processing for forgery prevention is executed for image data on the SDRAM 106 serving as an image memory in step S601.

In this embodiment, the original image shown in Fig. 8A is processed to generate the processed image shown in Fig. 8B, e.g., a solid gray image. The principle of this processing has already been described above with reference to Fig. 9.

Next, the user input window (warning dialogue) shown in Fig. 10 is displayed on the user interface (not shown) in step S602.

That is, when the image that input from the scanner 111 may be an original to be copy-protected, the user can confirm whether the image is to be really printed by the printer.

It is checked in step S603 whether a button in the user input window, i.e., "YES" corresponding to the button BT1 or "NO" corresponding to the button BT2 is selected as a user input. If "YES" is selected (if the image is to be printed), a log as shown in Fig. 11 is stored in the HDD 108, and the processing is ended. With this processing, the fact that an original to be copy-protected has been read can be left as evidence, and the presence/absence of input of an original that requires forgery prevention can be very easily confirmed later.

If "NO" in step S603, i.e., if the image is not to be printed, the SDRAM 106 which stores the image is released to discard the image in step S604, and the processing is ended. In this case, when the flow advances to printing start processing in step S706 of Fig. 7, this processing is immediately skipped, and the processing is ended without printing.

This control is performed in the same way as described above even when the image read by the scanner 111 is sent to another device such as a personal computer through the LAN 115 instead of printing the image by the printer 114. More specifically, when it is determined in step S704 of Fig. 7 that the read image is an image to be copy-protected, processing from step S601, which corresponds to forgery prevention control processing in step S705, is executed. If "NO" in step S603, the image memory is released in step S604, and the entire processing is ended. Hence, the image data is not sent to the LAN 115.

If "YES" in step S603, the image data processed in step S601 is transmitted through the LAN 115. Hence, the image sent via the LAN 115 is the processed image data shown in Fig. 8B.

(Second Embodiment)

In the first embodiment, a case wherein predetermined image processing is executed for the input image of a forgery prevention target original in copy processing has been described. Even when an image processing system is used as a printer, forgery prevention processing can be similarly performed. This embodiment will be described below.

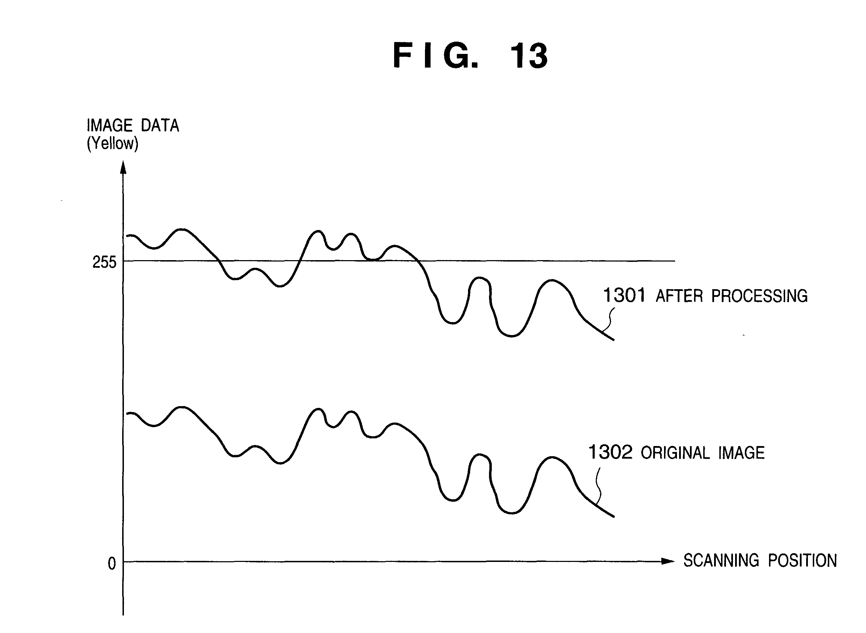

Fig. 13 is a graph showing the principle of image processing for forgery target image data in the image processing system according to the present invention. The ordinate represents Yellow data of part of an image, and the abscissa represents the main scanning position of the image. For example, when the image data has a color space format with M (Magenta) C (Cyan), Y (Yellow), and BK (Black), the image data has 256 grayscale levels for "0" to "255". As the grayscale level becomes close to "255", the image becomes dark.

Referring to Fig. 13, image data 1302 represents the original image before processing, which is stored in an SDRAM 106 shown in Fig. 1. When all pixel values of this image data are increased by a predetermined value, processed image data 1301 is generated. In the image data 1301, all data equal to or larger than "255" become "255", so the information of the change in image is lost. When this processing is also executed for Magenta, Cyan, and Black data except the Yellow data, the image as shown in Fig. 8B is output.

As in the first embodiment, the processed image cannot be returned to the image before processing.

For the dialogue shown in Fig. 10, if the user determines that printing is not to be performed (when a button BT2 is selected), a printing stop instruction is issued to end printing.

For the dialogue shown in Fig. 10, if the user determines that printing is to be performed (when a button BT1 is selected), operation log information shown in Fig. 11 is stored on an HDD 108. As for the image to be printed, the processed image data is printed, and the image data shown in Fig. 13 is not directly output.

As the digital watermark of the present invention, an invisible watermark embedded in a specific frequency of an image (invisible copy inhibition information), a visible watermark embedded on an image to be copy-protected with unnoticeable size and color (visible copy inhibition information), or a combination thereof can be used. It is preferable to embed a digital watermark in the pattern of an image to be copy-protected in advance because the digital watermark then completely becomes unrecognizable.

When the log information shown in Fig. 11 is encrypted and stored in a folder of the HDD 108 such that it cannot be decrypted without using a dedicated application, the log of processing of images to be copy-protected can be stored at high security.

The log information shown in Fig. 11 may be added to the processed image as a digital watermark. With this arrangement, the added digital watermark can be detected from the print.

[Effects of Systems of First and Second Embodiments]

As described above, according to the systems of these embodiments, whether image data is the image data of an original to be copy-protected is detected using image data with a low resolution. Hence, an image processing system capable of detecting image to be copy-protected data in a short time can be implemented.

In addition, since the size of the image used to detect a digital watermark uses, as a unit, packets as image data transfer units in the system, it can be quickly determined whether the image to be copied is an original image for which copying is inhibited.

(Third Embodiment)

The third embodiment of the present invention will be described below with reference to the accompanying drawings.

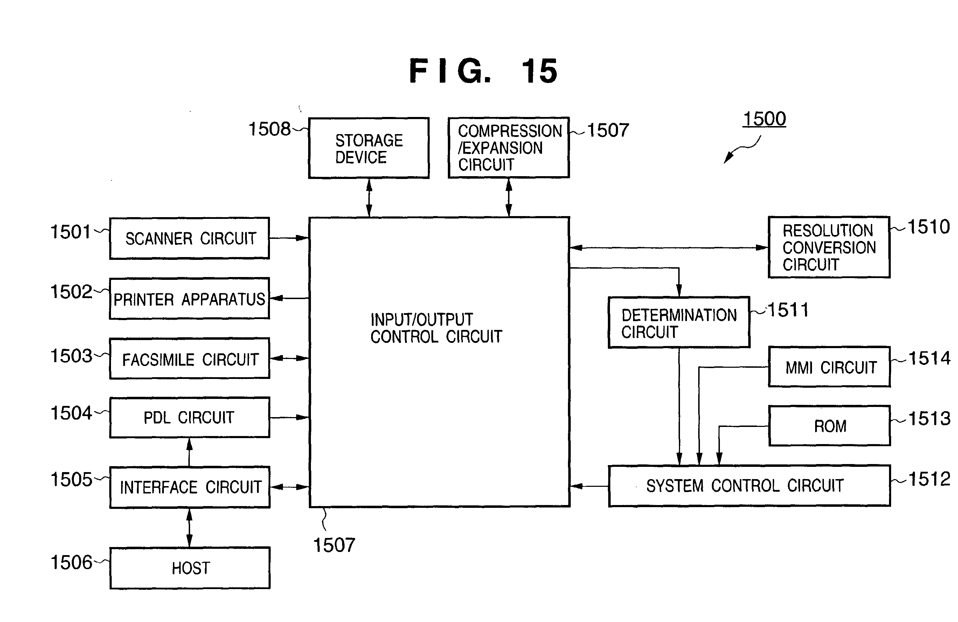

An image input/output processing method according to the present invention is practiced by, e.g., an image input/output processing apparatus 1500 as shown in Fig. 15. This image input/output processing apparatus 1500 uses an image input/output processing apparatus according to the present invention.

<Arrangement of Image Input/Output Processing Apparatus>

A series of operations of the above-described image input/output processing apparatus 1500 will be described first.

Image data read by a scanner circuit 1501, image data received by a facsimile circuit 1503, or image data obtained by a PDL circuit 1504 is input to the image input/output processing apparatus 1500.

The scanner circuit 1501 supplies image data read by scanning an original to an input/output control circuit 1507. The facsimile circuit 1503 can transmit/receive image data and supplies received image data to the input/output control circuit 1507. The PDL circuit 1504 bitmaps page description language (PDL) data into a bitmap image. The PDL data is created by a host 1506, transferred through an interface circuit 1505, and input to the PDL circuit 1504. The interface circuit 1505 supplies PDL data to the PDL circuit 1504, transmits/receives data to/from the input/output control circuit 1507, and also performs two-way communication of image data with the host 1506.

The input/output control circuit 1507 controls the write/read operation of image data in/from a storage device 1508 and controls transmission/reception of image data to/from a compression/expansion circuit 1509, thereby storing the image data supplied from the scanner circuit 1501, facsimile circuit 1503, or PDL circuit 1504 in the storage device 1508. The input/output control circuit 1507 also supplies image data supplied through a resolution conversion circuit 1510 to a determination circuit 1511.

The determination circuit 1511 determines whether the image data from the input/output control circuit 1507 is a specific image and supplies the determination result to a system control circuit 1512.

The system control circuit 1512 is formed from a CPU and the like to control the entire operation of the image input/output processing apparatus 1500 in accordance with various settings related to the image input/output processing apparatus 1500, which are made by a man-to-machine interface (MMI) circuit 1514 such as an operation section and a processing program stored in a ROM 1513 in advance. Especially, the system control circuit 1512 controls the operation of the input/output control circuit 1507 in accordance with the determination result from the determination circuit 1511.

Hence, the input/output control circuit 1507 supplies the image data stored in the storage device 1508 in the above-described manner, through the compression/expansion circuit 1509, to a printer apparatus 1502 for printing the image data in accordance with control by the system control circuit 1512.

The printer apparatus 1502 prints the image data from the input/output control circuit 1507.

<Arrangement of System Control Circuit 1512>

The above-described system control circuit 1512 will be described next in detail.

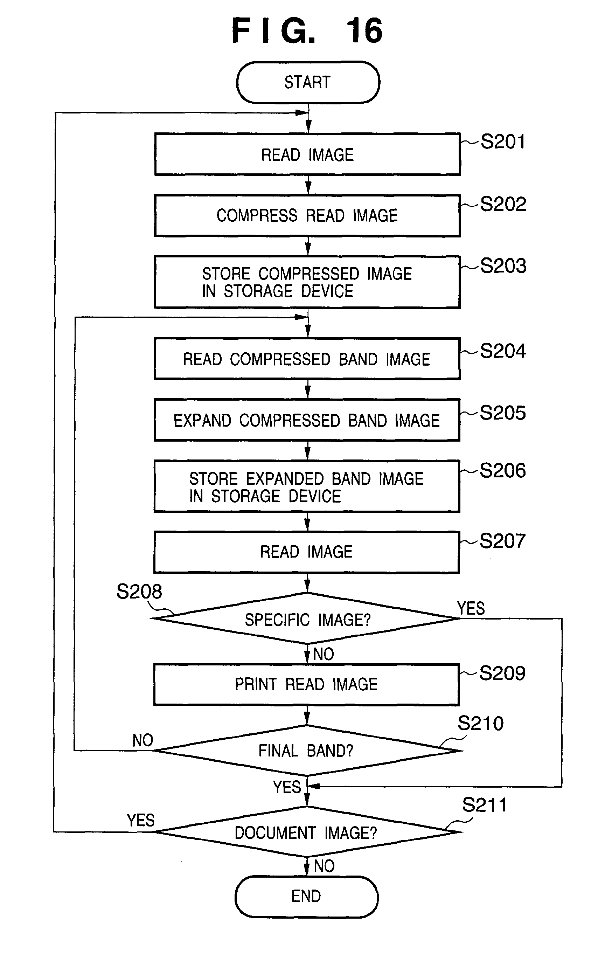

The ROM 1513 stores a control program according to, e.g., the flow chart shown in Fig. 16 in advance. This control program is read out and executed by the system control circuit 1512. Thus, the image input/output processing apparatus 1500 operates in the following way. Note that the control program shown in Fig. 16 implements a copy function, and the copy function is one of the functions of the image input/output processing apparatus 1500.

When the control program shown in Fig. 16, which is stored in the ROM 1513, is read out and executed by the system control circuit 1512, the system control circuit 1512 issues an image read instruction to, e.g., the scanner circuit 1501 through the input/output control circuit 1507. The scanner circuit 1501 reads an image on an original (not shown) as digital image data (to be referred to as image data hereinafter) (step S201).

The image data read by the scanner circuit 1501 in step S201 is compressed by the compression/expansion circuit 1509 by a predetermined compression scheme (step S202) and stored in the storage device 1508 (step S203) under the control of the input/output control circuit 1507.

The image data stored in the storage device 1508 is segmented into a plurality of band regions, read out in units of band regions (step S204), expanded by the compression/expansion circuit 1509 by a predetermined expansion scheme (step S205), and stored in the storage device 1508 (step S206) under the control of the input/output control circuit 1507.

Segmentation into bands may be performed in the storage process of step S203 or in the compression process of step S202 to compress the image data in units of bands.

A band means a block obtained by segmenting image data along the main scanning direction. Hence, the widthwise dimension of a band matches the widthwise dimension of image data. The longitudinal dimensions of the bands may be constant or appropriately determined in units of bands. If the longitudinal dimensions of the bands are not to be constant, for example, they are determined in the following way. Predetermined upper and lower limit values are determined for the band height. The upper and lower limit values are determined in accordance with a watermark to be detected, the size of the specific image, and the capacity of the available memory. It is checked whether a line having uniform color and density is present in the main scanning direction between a line separated downward from the upper side of the band by the upper limit value and a line separated downward by the lower limit value. If such a line is present, the band is segmented while defining a line immediately before or after that line as the lower side of the band. This prevents the specific image or watermark from being segmented into bands.

Next, the image data read in units of bands is supplied to the determination circuit 1511 through the resolution conversion circuit 1510 (step S207). The determination circuit 1511 determines whether the supplied image data is a specific image in accordance with the presence/absence of a digital watermark or by collation of the image (step S208).

If determination is to be done on the basis of the presence/absence of a digital watermark, the determination circuit 1511 determines whether specific digital watermark information inserted in advance into the image data supplied from the input/output control circuit 1507 is present. If the supplied image data has digital watermark information, it is determined that the image data is a specific image. The digital watermark determination can be done by the method described in the first embodiment.

If determination is to be done by collating the characteristic features, the determination circuit 1511 extracts the characteristic feature of the supplied image data and compares the feature data with the feature data of a specific image held in advance, e.g., a specific image such as securities or bank note which should not be copied, thereby determining the similarity. When the similarity between the specific image and the supplied image data is equal to or larger than a predetermined value, it is determined that the image data is a specific image.

This determination processing will be described later in detail. The determination result from the determination circuit 1511 is supplied to the system control circuit 1512.

The image data supplied to the determination circuit 1511 is image data whose number of pixels is decreased by processing such as pixel thinning by the resolution conversion circuit 1510. The first determination processing is executed to determine whether the image data is a specific image using the image data whose number of pixels is decreased.

If it cannot be determined by the first determination processing whether the image data is a specific image, the resolution of the image data supplied is changed, and the second determination processing is executed to determine whether the image data is a specific image. For this second determination processing, the image data read out from the storage device 1508 is supplied to the determination circuit 1511 without intervening the resolution conversion circuit 1510. If it is determined by the first determination processing that the image data is not a specific image, the second determination processing is not performed. In the second determination processing, it is always determined whether the image data is a specific image.

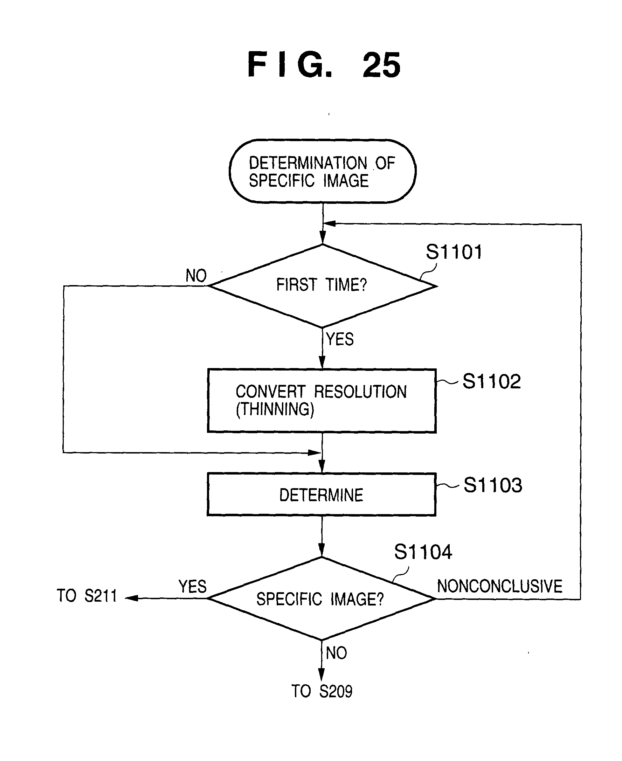

Fig. 25 shows the flow of processing in step S208. In step S1101, it is determined whether the determination processing is determination processing for the first time (first determination processing) or determination processing for the second time (second determination processing). For determination processing for the first time, the resolution of the image is reduced by, e. g., thinning in step S1102. Otherwise, i.e., for determination processing for the second time, the resolution of the original image is not changed. Actual determination processing is executed in step S1103. This result is determined in step S1104. If the image is a specific image, the flow branches to "Y"; otherwise, the flow branches to "N". If the result is nonconclusive, determination processing is executed again using image data with the unchanged resolution.

Since the image supplied for the first determination processing is a coarse image, the accuracy of the first determination result as the result of the first determination processing is expected to be poor. However, when the image data is obviously different from the specific image, sufficient determination can be made.

The above-described image data supplied for the second determination processing is not passed through the resolution conversion circuit 1510. However, when the resolution of the input image data is sufficiently high, the resolution conversion circuit 1510 may execute processing such as pixel thinning without making the resolution lower than the first resolution.

When it is determined by the first and second determination processing that the image data is not a specific image, the system control circuit 1512 ends the determination processing and instructs the input/output control circuit 1507 to read out the image data from the storage device 1508 and output the data to the printer apparatus 1502. The input/output control circuit 1507 reads out the image data stored in the storage device 1508 in step S206 and supplies it to the printer apparatus 1502. The printer apparatus 1502 prints the image data supplied from the input/output control circuit 1507 (step S209).

The system control circuit 1512 determines through the input/output control circuit 1507 whether the band is the final band to determine whether all band regions of the image data stored in the storage device 1508 have been processed (step S210).

If NO in step S210, the system control circuit 1512 performs operation control to repeat the above-described processing from step S204.

In this way, all band regions of the image data stored in the storage device 1508 are read out and printed by the printer apparatus 1502.

When the determination result of the determination circuit 1511 indicates that the image data is a specific image, the system control circuit 1512 instructs the input/output control circuit 1507 not to execute the above-described processing in steps S209 and S210. In this case, the image data stored in the storage device 1508 is not printed by the printer apparatus 1502. That is, bands from the band containing the specific image are not printed. In this case, a paper sheet for which printing is aborted is discharged before the start of printing of the next image.

After the above-described determination processing in step S208 and processing according to the determination result are performed, the system control circuit 1512 recognizes through the input/output control circuit 1507 whether the next image is read and input by the scanner circuit 1501 (step S211). For example, when an automatic document feeder (not shown) is connected to the scanner circuit 1501, and a plurality of originals are fed by the automatic document feeder to read images on the originals, the system control circuit 1512 recognizes whether the next original is present in accordance with the output from the original sensor of the automatic document feeder. If the next original is present, the system control circuit 1512 performs operation control to repeat the above-described processing from step S201.

To print a plurality of image data, the system control circuit 1512 recognizes, e.g., the number of sheets to be printed, which is set by the MMI circuit 1514. The above-described processing of printing one image is repeatedly executed in correspondence with the set number of sheets to be printed while determining whether printing by the printer apparatus for the set number of sheets is ended. With this operation, image data are repeatedly read out from the storage device 1508 and printed by the printer apparatus 1502.

In this embodiment, since a specific image is determined in units of bands, the entire specific image is not always contained in one band. To cope with this situation, the following two measures can be taken.

As the first method, the manner an image is segmented into bands is determined such that a specific image is not segmented. In this case, for example, a white raster or a raster formed from only color components that are not contained in a specific image is selected as a band segmentation line, and the image is segmented into bands along this raster line. When an image is segmented into bands in this way, a specific image can be prevented from being segmented into a plurality of bands.

As the second method, it is determined whether the image is a specific image from a partial image contained in each band. As described above, to determine a specific image, a method using a digital watermark and a method using collation of characteristic features can be used. In the second method, if a specific image is to be determined by collating the characteristic features, the image contained in each band and part of a feature image are collated for determination. If part of a specific image is contained, the image is determined as a specific image. In specific image determination using a digital watermark as well, the digital watermark is extracted in units of bands.

In this way, it is determined from each band as part of the image whether a specific image is contained in the image.

Determination processing (step S208) performed by the above-described determination circuit 1511 will be described next in detail.

<Specific Image Determination Processing by Digital Watermark>

An example in which a digital watermark is used as a specific image used in this embodiment will be described first. For example, image data (to also be referred to as an input image hereinafter) read by the scanner circuit 1501 is input to the determination circuit 1511.

The determination circuit 1511 segments the input image into blocks, computes the Fourier transform for each block, and extracts a frequency component.

The input image in the frequency domain consequently obtained is separated into an amplitude spectrum and a phase spectrum. A registration signal contained in the amplitude spectrum is detected.

A low-frequency component signal embedded in an image is readily recognized as noise because of the human visual characteristics, unlike a high-frequency component signal. In addition, an irreversible compression/expansion scheme such as JPEG compression has a low-pass filter effect, and therefore, a high-frequency component embedded in an image is removed by compression/expansion processing. In consideration of these problems, the registration signal is embedded by an impulse signal at a frequency of intermediate level more than a first frequency level that can hardly be recognized by the human eye and less than a second frequency level that is not removed by irreversible compression/expansion.

In registration detection, an impulse signal in the frequency domain at the above-described intermediate level contained in the amplitude spectrum is extracted.

The scaling ratio of the input image is calculated from the coordinates of the extracted impulse signal. The determination circuit 1511 for detecting a digital watermark recognizes in advance which frequency component in the determination target image before scaling has an impulse signal.

The scaling ratio can be calculated from the ratio of the frequency component recognized in advance to the frequency for which an impulse signal is detected. For example, let $a$ be the frequency recognized in advance, and b be the frequency of the detected impulse signal. Then, it can be known that scaling at a ratio a/b has been performed. This is a known nature of the Fourier transform.

The size of a pattern for detecting the digital watermark contained in the input image is determined. The digital watermark contained in the digital image data is detected by convolution which uses the pattern.

The digital watermark can be added to any frequency component of the input image. In this embodiment, the digital watermark is added to a blue component to which the human eye is least sensitive. In this case, the above pattern detection is performed for the blue component.

When a digital watermark is embedded in the input image not by adding it to a visible color component of the input image but by embedding information into a specific frequency component, the digital watermark detection processing may be executed for the specific frequency after computing the Fourier transform of the input image.

<Specific Image Determination Processing by Image Collation>

Determination processing (step S208) different from the above-described determination processing will be described next. For example, when image data read by the scanner circuit 1501 is color image data, the determination circuit 1511 converts the input image and a specific image into a common color space and compares the input image with the specific image in units of pixels in the common color space.

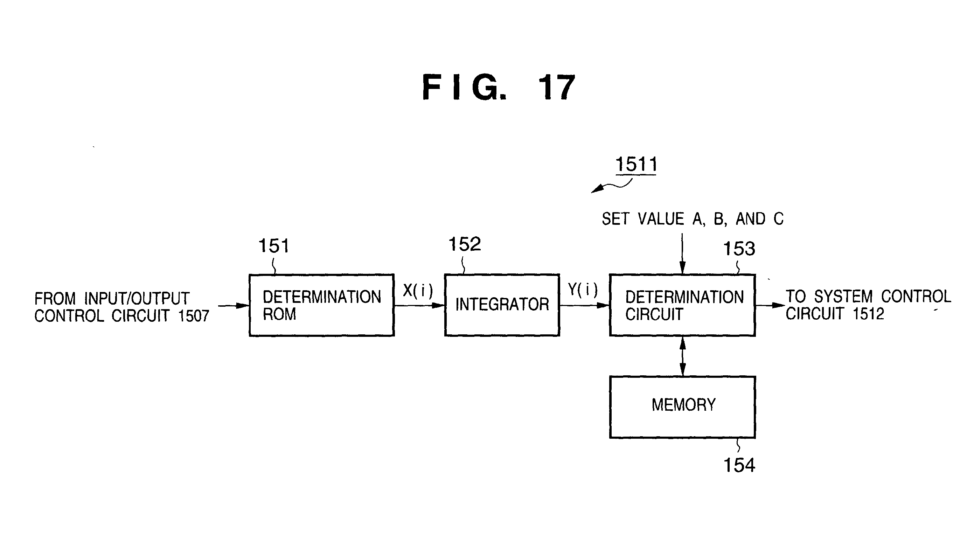

For this purpose, for example, as shown in Fig. 17, the determination circuit 1511 has a determination ROM 151 to which image data from the input/output control circuit 1507 (Fig. 15) is supplied, an integrator 152 to which the output from the determination ROM 151 is supplied, a determination circuit 153 to which the output from the integrator 152 is supplied, and a memory 154 accessed by the determination circuit 153, so that the output from the determination circuit 153 is supplied to the system control circuit 1512 (Fig. 15).

In the above-described determination circuit 1511, the determination ROM 151 supplies image data from the input/output control circuit 1507 to the integrator 152 as an address input. At this time, if the color space data of the input image is contained in the color space data of a specific image, a value "1" is assigned; otherwise, a value "0" is assigned. This value is input to the integrator 152 as X(i).

Using X(i) from the determination ROM 151, the integrator 152 calculates

$$Y(i) = AY(i - 1) + 255(1 - A)X(i)$$

i = 1, 2, 3, ... 0 < A < 1 and supplies an integrated value Y(i) to the determination circuit 153.

The determination circuit 153 obtains the number of pixels for which the integrated value Y(i) as the output from the integrator 152 is equal to or larger than a preset value (set value A). Thus, the number of pixels in a region of the input image, which is supposed to be a specific image, is calculated.

The reason why the integrated value Y(i) is used is as follows. If the input image is contained in the color space data of a specific image, a number of pixels are consecutively contained. Hence, sporadically contained pixels are screened by integration.

When the number of pixels calculated in the above-described way is equal to or larger than a preset value (set value B), the determination circuit 153 recognizes that the input image is an image that contains the color space of a specific image in some region, i.e., the input image is probably the specific image and executes similarity determination processing.

In this case, the determination circuit 153, for example, makes an arbitrary color of the color space correspond to an address of the memory 154 and stores "1" at an address on the memory 154, which corresponds to the color of a certain pixel for which the integrated value Y (i) as the output from the integrator 152 is equal to or larger than the set value A. This processing is executed for all pixels of the input image.

The determination circuit 153 counts the number of pixels stored on the memory 154 as "1"s. If the count value is equal to or larger than a preset value (set value C), the determination circuit 153 determines that the input image is similar to the specific image and supplies the determination result to the system control circuit 1512.

When the similarity is determined by the determination circuit 153, repetitive processing that is caused when the count value of the integrated value Y(i) as the output from the integrator 152 is obtained by counting the same color a plurality of number of times can be avoided, and it can be determined whether the image contains the color space of the specific image in a wide range.

In determination processing by the determination circuit 1511, it is determined by the arrangement shown in Fig. 17 whether an input image is a specific image. However, the present invention is not limited to this, and determination may be done in accordance with another algorithm. That is, in this embodiment, it only need be determined whether an input image is a specific image.

As described above, in the third embodiment, in determining whether image data input by an input means is a specific image, the image data is segmented into band regions, and resolution conversion processing such as pixel thinning is performed. Since specific image determination is done in units of bands, the amount of image data processed decreases. When pixels are thinned, the data amount further decreases. For this reason, it can be quickly determined whether the input image contains the specific image. For an original such as a general document image that is obviously different from the specific image, the specific image can be sufficiently determined using image data after pixel thinning. This reduces the load of determination processing in forgery prevention, shortens the time required for determination, and consequently improves the performance of copying.

For only image data that cannot be determined as the specific image using a low-resolution image, the specific image is determined without converting the resolution. With this arrangement, accurate determination can be performed, and forgery can be reliably prevented.

(Modification of Third Embodiment)

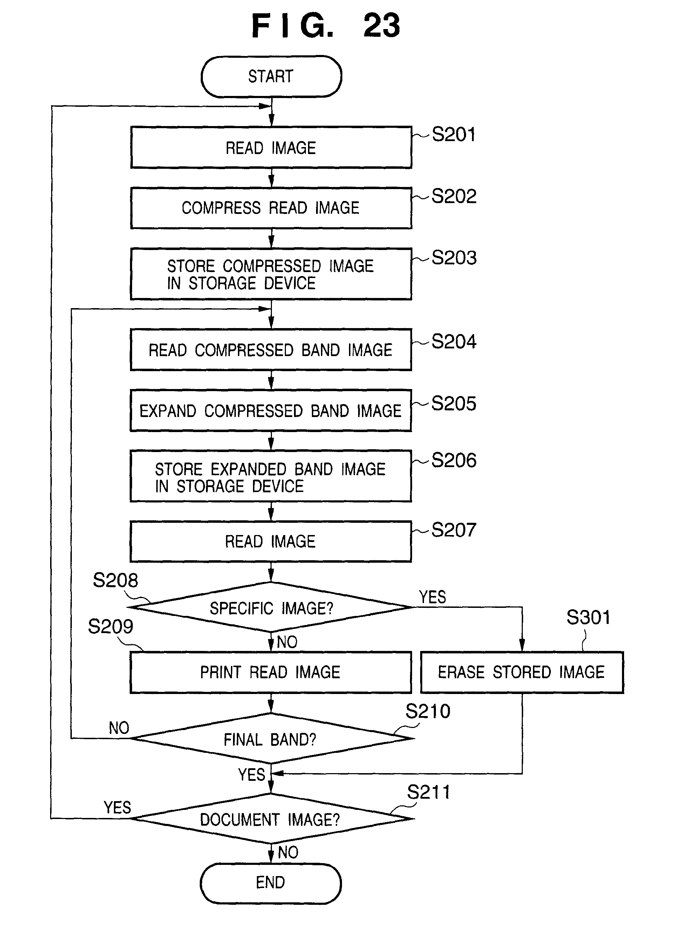

In the above-described third embodiment, in the control program shown in Fig. 16, when it is determined by determination processing in step S208 that the input image data is the specific image, processing in step S211 is executed without executing the above-described processing in steps S209 and S210. For example, as shown in Fig. 23, processing in step S211 may be executed after the image data stored in the storage device 1508 in steps S203 and S206 are erased (step S301).

That is, if the input image data is determined as the specific image by determination processing in step S208, the image data as the specific image does not remain in the storage device 1508 even when the storage device 1508 is, e.g., a removable nonvolatile storage medium. Hence, forgery can be reliably prevented.

(Fourth Embodiment)

The fourth embodiment will be described next. In the third embodiment, image data read by the scanner circuit 1501 is printed by the printer apparatus 1502. In the fourth embodiment, PDL data transferred from a host 1506 is bitmapped and printed by a printer apparatus 1502 (communication function).

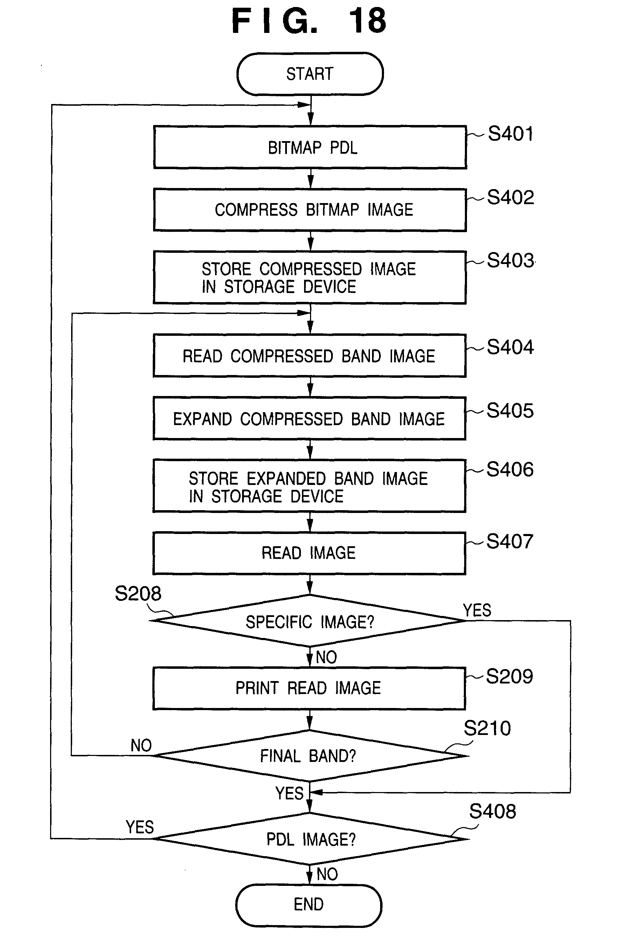

For this purpose, for example, a control program according to the flow chart shown in Fig. 18 is used in place of the control program show in Fig. 16. The control program shown in Fig. 18 is also stored in a ROM 1513 in advance, and read out and executed by a system control circuit 1512.

The same step numbers as in the control program shown in Fig. 16 denote the same steps in the control program shown in Fig. 18, and a detailed description thereof will be omitted. The apparatus that operates when the control program shown in Fig. 18 is executed has the same arrangement as the image input/output processing apparatus 1500 shown in Fig. 15, and a detailed description thereof will be omitted.

Only points different from the above-described third embodiment will be described below in detail.

First, when the system control circuit 1512 reads out and executes the control program shown in Fig. 18, which is stored in the ROM 1513, image data generated by the host 1506 is transferred to a PDL circuit 1504 through an interface circuit 1505 under general-purpose protocol control such as SCSI (Small Computer System Interface) or TCP (Transmission Control Protocol) /IP (Internet Protocol). The system control circuit 1512 issues a PDL bitmapping instruction to the PDL circuit 1504 through an input/output control circuit 1507. Thus, the PDL circuit 1504 bitmaps the image data (PDL data: data described by the PDL) transferred from the host 1506 (step S401).

The image data (bitmap image) bitmapped by the PDL circuit 1504 in step S401 is compressed by a predetermined compression scheme by a compression/expansion circuit 1509 (step S402) and stored in a storage device 1508 (step S403) under the control of the input/output control circuit 1507.

The image data stored in the storage device 1508 is segmented into a plurality of band regions, read out in units of band regions (step S404), expanded by a predetermined expansion scheme by the compression/expansion circuit 1509 (step S405), and stored in the storage device 1508 (step S406) under the control of the input/output control circuit 1507. Segmentation into bands may be performed in compression or storage.

The expanded and stored image data in each band region is read out (step S407) and supplied to a determination circuit 1511 through a resolution conversion circuit 1510.

After that, the same processing in steps S208 to S213 in Fig. 16 is executed, as described above. If it is determined that the image data is not a specific image, the image data stored in the storage device 1508 is read out and printed by the printer apparatus 1502.

If the image data is a specific image, the image data stored in the storage device 1508 is not printed by the printer apparatus 1502.

After the above-described determination processing in step S208 is performed, and processing according to the determination result is performed, the system control circuit 1512 recognizes through the input/output control circuit 1507 whether the next image data is transferred from the host 1506 to the PDL circuit 1504 (step S408). If YES in step S408, the system control circuit 1512 performs operation control to repeat the above-described processing from step S401.

After that, processing in steps S208 to S210 is executed, thereby reading out the image data stored in the storage device 1508 and printing it by the printer apparatus 1502.

To print a plurality of image data, the system control circuit 1512 recognizes, e.g., the number of sheets to be printed, which is set by an MMI circuit 1514. When the above-described processing of printing one image is repeatedly executed in correspondence with the set number of sheets to be printed while determining whether printing by the printer apparatus for the set number of sheets is ended. With this operation, image data are repeatedly read out from the storage device 1508 and printed by the printer apparatus 1502.

As described above, in the fourth embodiment, in determining whether image data (PDL data) transferred from the host 1506 is a specific image, the image data is segmented into band regions, and resolution conversion processing such as pixel thinning is performed. Since specific image determination is done in units of bands, the amount of image data processed decreases. When pixels are thinned, the data amount further decreases. For this reason, it can be quickly determined whether the input image contains the specific image. For an original such as a general document image that is obviously different from the specific image, the specific image can be sufficiently determined using image data after pixel thinning. This reduces the load of determination processing in forgery prevention, shortens the time required for determination, and consequently improves the performance of copying.

For only image data that cannot be determined as the specific image using a low-resolution image, the specific image is determined without converting the resolution. With this arrangement, accurate determination can be performed, and forgery can be reliably prevented.

(Modification of Fourth Embodiment)

In the above-described fourth embodiment, image data transferred from the host 1506 is printed by the printer apparatus 1502. However, the present invention is not limited to this. For example, image data (facsimile image data) received by a facsimile circuit 1503 may be printed by the printer apparatus 1502 (facsimile function). In this case, the same operation as described above is performed while replacing the image data bitmapped by the PDL circuit 1504 with the facsimile image data received by the facsimile circuit 1503.

In the above-described fourth embodiment, PDL data transferred from the host 1506 is printed by the printer apparatus 1502. However, the present invention is not limited to this. For example, color space data may be bitmapped in the host 1506, and image data in each of a plurality of segmented band regions may be transferred from the host 1506. Alternatively, predetermined resolution conversion processing and determination processing of determining whether the image is a specific image may be performed in the host 1506 for image data in each of the plurality of segmented band regions. In this case, each image data is stored in the storage device 1508 through the input/output control circuit without intervening the PDL circuit 1504 and compression/expansion circuit 1509, read out from the storage device 1508, and printed by the printer apparatus 1502.

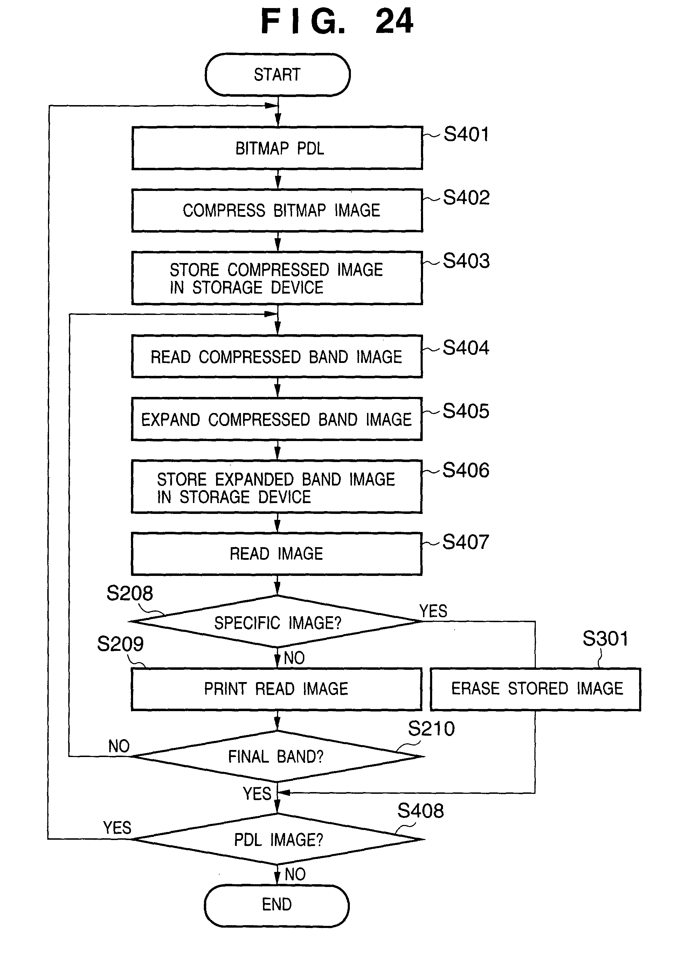

In the above-described fourth embodiment, in the control program shown in Fig. 18, when it is determined by determination processing in step S208 that the input image data is the specific image, processing in step S408 is executed without executing the above-described processing in steps S209 and S210. For example, as shown in Fig. 24, processing in step S408 may be executed after the image data stored in the storage device 1508 in steps S403 and S406 are erased (step S301).

That is, if the input image data is determined as the specific image by determination processing in step S208, the image data as the specific image does not remain in the storage device 1508 even when the storage device 1508 is, e.g., a removable nonvolatile storage medium. Hence, forgery can be reliably prevented.

(Fifth Embodiment)

The fifth embodiment will be described next.

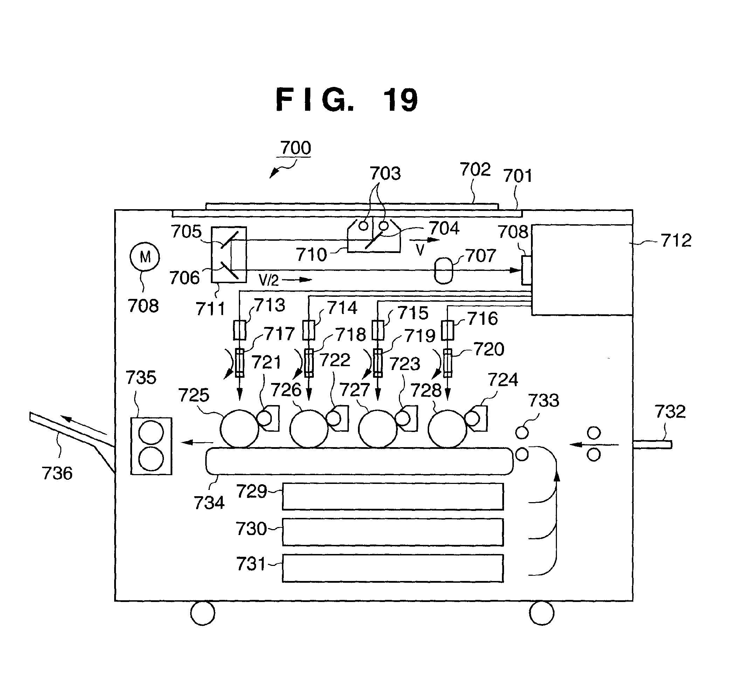

An image input/output method according to the fifth embodiment is practiced by, e.g., a color copying machine 700 shown in Fig. 19.

As shown in Fig. 19, this color copying machine 700 comprises an original glass table 701 on which an original 702 to be read is placed, an illumination 703 for illuminating the original 702 placed on the original glass table 701, an optical system 707, mirrors 704 to 706 for guiding light from the original 702 to the optical system 707, an image sensing element 708 on which light from the original 702 forms an image, a motor 709 for driving a first mirror unit 710 including the mirror 704 and illumination 703 and a second mirror unit 711 including the mirrors 705 and 706, an image processing circuit 712 to which the output from the image sensing element 708 is supplied, semiconductor lasers 713 to 716 to which the output from the image processing circuit 712 is supplied, polygon mirrors 717 to 720 to which the outputs from the semiconductor lasers 713 to 716 are supplied, respectively, photosensitive drums 725 or 728 to which the outputs from the polygon mirrors 717 to 720 are supplied, respectively, developing units 721 to 724 for supplying toners onto the photosensitive drums 725 or 728, respectively, paper cassettes 729 to 731, a manual feed tray 732, a transfer belt 734, registration rollers 733 for guiding a paper sheet fed from one of the paper cassettes 729 to 731 and manual feed tray 732 onto the transfer belt 734, a fixing unit 735 for fixing toners transferred to the paper sheet on the transfer belt 734 by the photosensitive drums 725 or 728, and a discharge tray 736 for discharging the paper sheet on which the toners are fixed by the fixing unit 735.

The color copying machine 700 has the function of the image input/output processing apparatus 1500 shown in Fig. 15. The original table glass 701, illumination 703, optical system 707, image sensing element 708, first mirror unit 710, second mirror unit 711 and motor 709 constitute a section for reading an image, which corresponds to the scanner circuit 1501 shown in Fig. 15. The image processing circuit 712 is a section for outputting an image signal to be printed, which corresponds to the input/output control circuit 1507, storage device 1508, compression/expansion circuit 1509, resolution conversion circuit 1510, determination circuit 1511, and system control circuit 1512 shown in Fig. 15. The semiconductor lasers 713 to 716, polygon mirrors 717 to 720, photosensitive drums 725 to 728, paper cassettes 729 to 731, manual feed tray 732, transfer belt 734, registration rollers 733, fixing unit 735, and discharge tray 736 constitute a section for printing an image, which corresponds to the printer apparatus 1502 shown in Fig. 15.

First, the original 702 to be read is placed on the original table glass 701. This original 702 is illuminated with the illumination 703. The image of reflected light from the original 702 is formed on the image sensing surface of the image sensing element 708 by the optical system 707 sequentially through the mirrors 704, 705, and 706.

At this time, the motor 709 mechanically drives the first mirror unit 710 including the mirror 704 and illumination 703 at a velocity V and also mechanically drives the second mirror unit 711 including the mirrors 705 and 706 at a velocity V/2. Thus, the entire surface of the original 702 is scanned.

The image sensing element 708 is formed by a solid-state image sensing element (CCD: Charge Coupled Device) to convert the image formed by the optical system 707 into an electrical image signal by photoelectric conversion and supply the signal to the image processing circuit 712.

The image processing circuit 712 executes predetermined processing for the image signal from the image sensing element 708 and outputs the signal as a print signal. As described above, it is determined whether the original 702 is a specific image, and processing according to the determination result is executed. If the original 702 is a specific image, no print signal is output. Alternatively, a processed print signal is output.

The semiconductor lasers 713 to 716 are driven by the print signal output from the image processing circuit 712. Laser beams emitted from the semiconductor lasers 713 to 716 form latent images on the photosensitive drums 725 to 728 through the polygon mirrors 717 to 720, respectively.

The developing units 721 to 724 develop the latent images formed on the photosensitive drums 725 to 728 using K, Y, C, and M toners.

At this time, a paper sheet fed from one of the paper cassettes 729 to 731 and manual feed tray 732 is passed between the registration rollers 733, chucked on the transfer belt 734, and conveyed.

In synchronism with the paper feed timing, the color toners are developed onto the photosensitive drums 725 to 728 in advance. The color toners are transferred to the paper sheet as it is conveyed.

The paper sheet having the transferred color toners is separated and conveyed from the transfer belt 734. The toners are fixed to the paper sheet by the fixing unit 735, and the paper sheet is discharged from the discharge tray 736.

As described above, when the present invention is applied to the color copying machine 700, in determining whether the placed original 702 is a specific image, the input image data is segmented into band regions, and resolution conversion processing such as pixel thinning is performed. Since specific image determination is done in units of bands, the amount of image data processed decreases. When pixels are thinned, the data amount further decreases. For this reason, it can be quickly determined whether the input image contains the specific image. For an original such as a general document image that is obviously different from the specific image, the specific image can be sufficiently determined using image data after pixel thinning. This reduces the load of determination processing in forgery prevention, shortens the time required for determination, and consequently improves the performance of copying.

For only image data that cannot be determined as the specific image using a low-resolution image, the specific image is determined without converting the resolution. With this arrangement, accurate determination can be performed, and forgery can be reliably prevented. Hence, the color copying machine 700 which can reliably prevent forgery and has excellent performance can be provided.

The image input/output method according to this embodiment has been described by exemplifying the color copying machine 700 shown in Fig. 19. However, the present invention is not limited to this. The image input/output method can also be applied to an inkjet printer as the printer apparatus 1502 shown in Fig. 15, as will be described below.

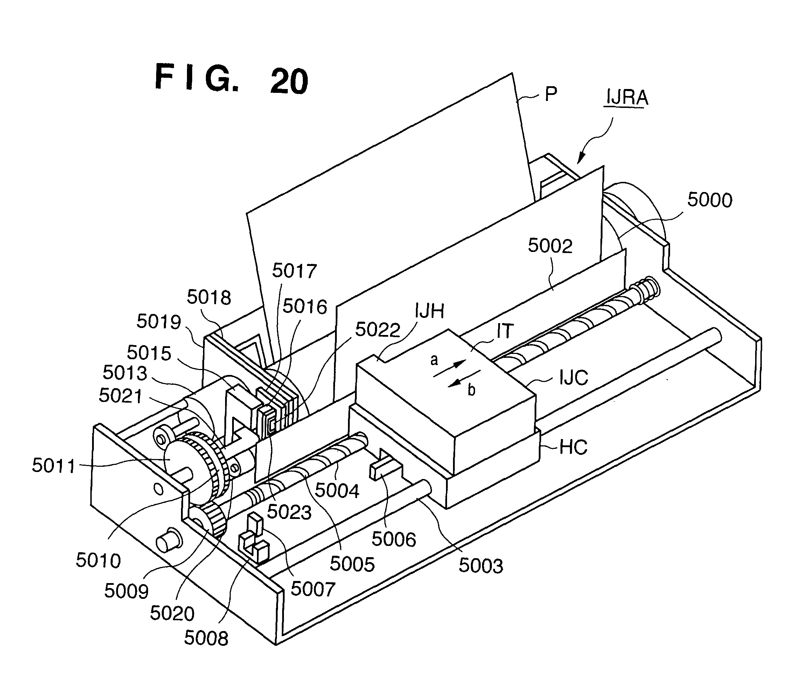

Fig. 20 is a view of an inkjet printing apparatus IJRA to which the present invention can be applied. Referring to Fig. 20, a carriage HC engaging with a helical groove 5004 of a lead screw 5005 which is rotated through driving force transmission gears 5011 and 5009 in synchronism with forward/reverse rotation of a driving motor 5013 has a pin (not shown) and is reciprocally moved in the direction indicated by arrows a and b. An inkjet cartridge IJC is mounted on this carriage HC. A paper press 5002 presses a paper sheet against a platen 5000 along the moving direction of the carriage. Photocouplers 5007 and 5008 serve as a home position detection means for checking the presence of a lever 5006 of the carriage in this region to switch the rotational direction of the driving motor 5013. A member 5016 supports a cap member 5022 for capping the front surface of a printhead. A suction means 5015 draws the internal air of the cap to perform vacuum recovery of the printhead through a cap aperture 5023. Reference numeral 5017 denotes a cleaning blade, and a member 5019 allows this blade to move back and forth, which are supported by a main body support plate 5018. Instead of the blade in this form, a known cleaning blade may be applied to this example. A lever 5021 is used to start vacuum recovery. The lever 5021 moves as a cam 5020 engaging with the carriage moves. This movement is controlled by a known transmission means such as clutch switching for switching the driving force from the driving motor.

For the capping, cleaning, and vacuum recovery, desired processing can be performed at a corresponding position by the function of the lead screw 5005 when the carriage comes to the region on the home position side. Any arrangement can be applied to this example as long as desired operation can be performed at a known timing.

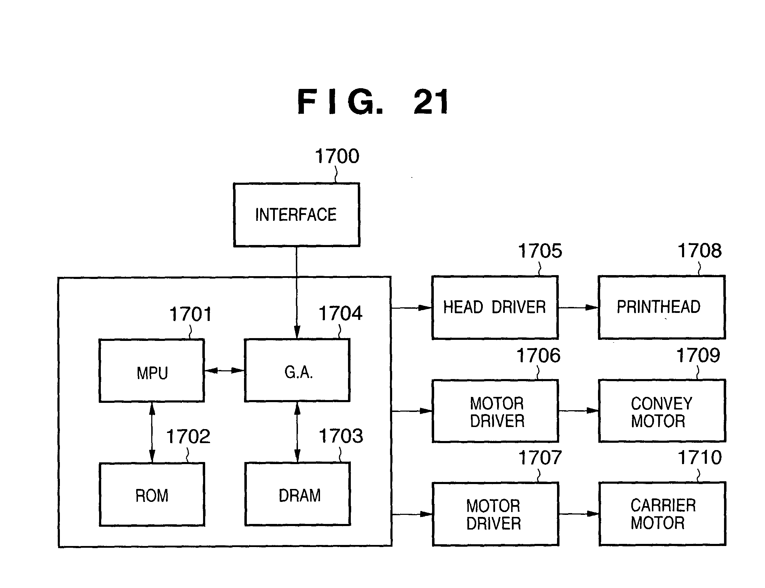

A control arrangement for executing print control of the above-described apparatus will be described next with reference to the block diagram shown in Fig. 21. Referring to Fig. 21 that shows a control circuit, reference numeral 1700 denotes an interface for inputting a print signal; 1701, an MPU; 1702, a program ROM which stores a control program executed by the MPU 1701; 1703, a dynamic RAM for storing various data (the print signal and print data to be supplied to the head). A gate array 1704 controls print data supply to a printhead 1708. The gate array 1704 also controls data transfer between the interface 1700, MPU 1701, and RAM 1703. A carrier motor 1710 conveys the printhead 1708. A convey motor 1709 conveys a printing paper sheet. A head driver 1705 drives the head. Motor drivers 1706 and 1707 drive the convey motor 1709 and carrier motor 1710, respectively.

The operation of this control arrangement will be described. When a print signal is input to the interface 1700, it is converted into print data for printing between the gate array 1704 and the MPU 1701. The motor drivers 1706 and 1707 are driven and the printhead is driven to print in accordance with the print data sent to the head driver 1705.

The present invention can be applied to the above inkjet printer control arrangement. With this arrangement, not only a laser beam printer but also an inkjet printer can quickly and accurately determine a specific image contained in the original to prevent forgery of the specific image.

(Sixth Embodiment)

The sixth embodiment will be described next.

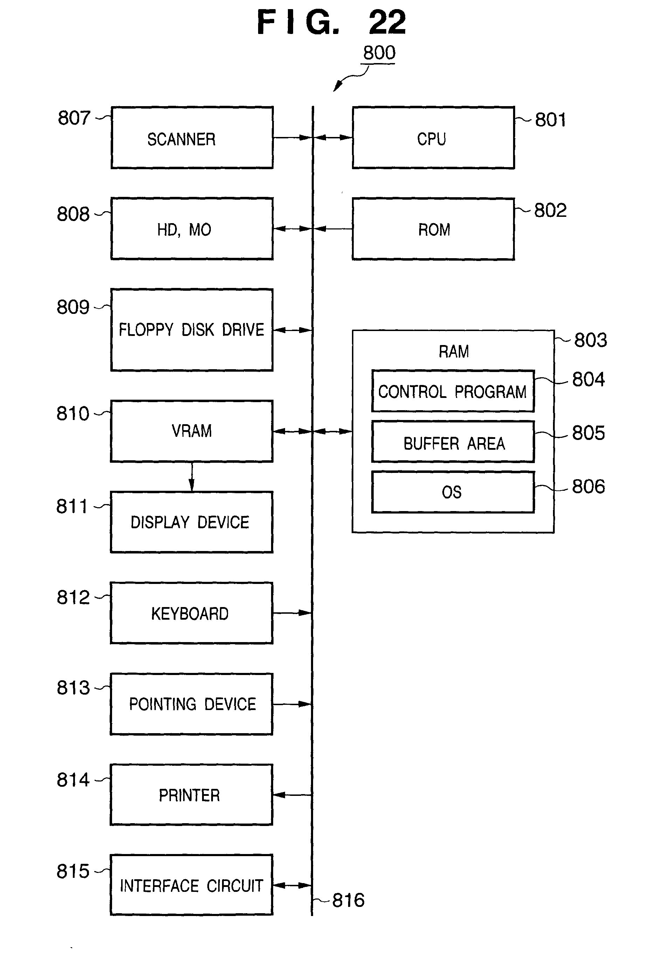

An image input/output processing apparatus according to this embodiment is practiced by, e.g., an information processing apparatus 800 shown in Fig. 22.

In this information processing apparatus 800, as shown Fig. 22, a CPU 801, ROM 802, RAM 803, image scanner 807, storage device 808, disk drive 809, VRAM 810, display device 811, keyboard 812, pointing device 813, printer 814, and interface circuit 815 are connected through a bus 816 so that data is exchanged therebetween.

The above-described information processing apparatus 800 has the function of the above-described image input/output processing apparatus 1500 shown in Fig. 15. The CPU 801 controls the entire operation of the information processing apparatus 800. This CPU 801 corresponds to the input/output control circuit 1507, determination circuit 1511, and system control circuit 1512 in Fig. 15.

The ROM 802 stores a boot program and BIOS (Basic Input/Output System) in advance.

The RAM 803 is used as a work area of the CPU 801, in which a control program 804 corresponding to the series of processing procedures, a buffer area 805 corresponding to the storage device 1508 in Fig. 15 and used for image reading and printing, and an operation system (OS) 806 for controlling the operation of the entire information processing apparatus 800, including the control program 804, are bitmapped or ensured. The control program 804 bitmapped in the RAM 803, for example, the control program shown in Fig. 16, 18, 23, or 24 is executed by the CPU 801, thereby controlling the operation of the entire information processing apparatus 800.

The image scanner 807 corresponds to the scanner circuit 1501 in Fig. 15 and reads an image.

The storage device 808 is a large-capacity storage device such as a hard disk device or magnetooptical disk device. The above-described OS 806 and the like are also stored in the storage device 808 in advance. The storage device 808 may be used as the storage device 1508 shown in Fig. 15.

The disk drive 809 reads data from a portable storage medium, e.g., a floppy disk. The above-described control program 804 is stored in one of the floppy disk set in the disk drive 809 or the storage device 808 in advance. The control program 804 is read by the CPU 801 and developed on the RAM 803.

The VRAM 810 is used to bitmap a bitmap image to be displayed in the window. The display device 811 displays the bitmap image bitmapped on the VRAM 810.

The keyboard 812 is used to input various pieces of information. The pointing device 813 is used to designate a desired position on the display window of the display device 811 or select a desired menu from various menus such as menu windows. The CPU 801 controls the operation of the entire information processing apparatus 800 also in accordance with the input from the keyboard 812 or pointing device 813.

The printer 814 corresponds to the printer apparatus 1502 in Fig. 15 and prints an image read by the image scanner 807.

The interface circuit 815 corresponds to the interface circuit 1505 shown in Fig. 15. The information processing apparatus is connected to another host by this interface circuit 815 through a network or the like. For example, PDL data transferred from another host is bitmapped by software processing by the CPU 801, and the bitmapped data can be subjected to resolution conversion processing such as pixel thinning.

As described above, when the present invention is applied to the general-purpose information processing apparatus 800, in determining whether image data read by the image scanner 807 or image data transferred through the interface circuit 815 is a specific image, the input image data is segmented into band regions, and resolution conversion processing such as pixel thinning is performed. Since specific image determination is done in units of bands, the amount of image data processed decreases. When pixels are thinned, the data amount further decreases. For this reason, it can be quickly determined whether the input image contains the specific image. For an original such as a general document image that is obviously different from the specific image, the specific image can be sufficiently determined using image data after pixel thinning. This reduces the load of determination processing in forgery prevention, shortens the time required for determination, and consequently improves the performance of copying.

For only image data that cannot be determined as the specific image using a low-resolution image, the specific image is determined without converting the resolution. With this arrangement, accurate determination can be performed, and forgery can be reliably prevented. Hence, the information processing apparatus 800 which can reliably prevent forgery and has excellent performance can be provided.

In the third to fifth embodiments as well, when an image is determined as a specific image which is to be copy-protected, the same processing as in the first and second embodiments may be performed instead of erasing the image data or inhibiting printing. That is, when an image is determined as an original to be copy-protected (specific image), choices as shown in Fig. 10 may be presented to the user, and the image may be subjected to the processing shown in Fig. 8B and output in accordance with the choice.

[Effects of Systems of Third to Fifth Embodiments]

As described above, according to the systems of the third to fifth embodiments, in determining whether a specific image is contained in an input image, the input image is segmented into band regions, and determination is done in units of bands, thereby decreasing the image data amount of the determination target. This allows quick determination by reducing the processing load for determination processing.

In addition, when determination processing is executed after the resolution of the image segmented into band regions is decreased, the amount of image data to be processed can be further decreased, and the determination processing can be more quickly performed. If it cannot be determined whether a specific image is contained using a low-resolution image, the same determination is done using an image having a higher resolution, so accurate determination can be realized. Hence, an increase in determination speed and an increase in accuracy can be simultaneously realized.

When the input image contains a specific image, the image is not stored and left. Hence, forgery can be reliably prevented.

The present invention described in the first to fifth embodiments may be applied to the data processing method in an apparatus constituted by a single device or a system constituted by a plurality of devices.

The object of the present invention is realized even by supplying a storage medium storing software program codes including the procedure shown in Fig. 7, 12, 14, 16, 18, 23, 24, or 25 for realizing the functions of the host and terminal of the above-described embodiments to a system or apparatus, and causing the computer (or a CPU or an MPU) of the system or apparatus to read out and execute the program codes stored in the storage medium.

In this case, the program codes read out from the storage medium realize the functions of the above-described embodiments by themselves, and the storage medium storing the program codes constitutes the present invention.

As a storage medium for supplying the program codes, a ROM, floppy disk, hard disk, optical disk, magnetooptical disk, CD-ROM, CD-R, magnetic tape, nonvolatile memory card, or the like can be used.

The functions of the above-described embodiments are realized not only when the readout program codes are executed by the computer but also when the OS running on the computer performs part or all of actual processing on the basis of the instructions of the program codes.

The functions of the above-described embodiments are also realized when the program codes read out from the storage medium are written in the memory of a function expansion board inserted into the computer or a function expansion unit connected to the computer, and the CPU of the function expansion board or function expansion unit performs part or all of actual processing on the basis of the instructions of the program codes.

As many apparently widely different embodiments of the present invention can be made without departing from the spirit and scope thereof, it is to be understood that the invention is not limited to the specific embodiments thereof except as defined in the appended claims.

**Claims**

1. An image processing apparatus characterized by comprising:

   determination means (101, 1511) for determining whether image data contains specific information for at least one block extracted from the image data; and
   image processing means (101, 1512) for executing predetermined processing for the image data which is determined by said determination means to contain the specific information.

2. The apparatus according to claim 1, characterized in that the specific information is predetermined image data, and said determination means performs the determination on the basis of at least the one block and the predetermined image data.

3. The apparatus according to claim 2, characterized in that said determination means comprises detection means for detecting, from entire image data, position information related to a position where the specific information is contained, and determines whether the specific information is contained on the basis of the position information detected by said detection means.

4. The apparatus according to claim 3, characterized in that

   said detection means detects the information related to the position using position detection image data obtained by decreasing resolution of the image data, and
   said determination means determines presence/absence of the specific information from the image data.

5. The apparatus according to claim 1, characterized by further comprising image read means (111, 1501) for generating the image data.

6. The apparatus according to claim 1, characterized in that the image data is image data for printing.

7. The apparatus according to claim 6, characterized by further comprising image formation means (114, 1502) for printing the image data.

8. The apparatus according to claim 1, characterized in that said image processing means executes processing of converting density or brightness of the image data as the predetermined processing.

9. The apparatus according to claim 1, characterized in that said image processing means erases the image data as the predetermined processing.

10. The apparatus according to claim 1, characterized in that the block has the same size as that of a block having a predetermined size as a unit of image data transfer in said image processing apparatus.

11. The apparatus according to claim 10, characterized in that said determination means comprises detection means for detecting, from entire image data, position information related to a position where the specific information is contained, specifies at least the one block from the image data on the basis of the position information detected by said detection means, and determines for at least the one block whether the specific information is contained.

**12.** The apparatus according to claim 1, characterized in that the block is a band obtained by segmenting the image data along a direction of a line of pixels.

**13.** The apparatus according to claim 12, characterized in that the band is a block obtained by segmenting the image data at a line having uniform color and density.

**14.** An image processing method characterized by comprising:

the determination step (S704, S208) of determining whether image data contains specific information for at least one block extracted from the image data; and
the image processing step (S705, S301) of executing predetermined processing for the image data which is determined in the determination step to contain the specific information.

**15.** The method according to claim 14, characterized in that the specific information is predetermined image data, and the determination step comprises performing the determination on the basis of at least the one block and the predetermined image data.

**16.** The method according to claim 15, characterized in that the determination step comprises the detection step (S1407, S1103) of detecting, from entire image data, position information related to a position where the specific information is contained and comprises determining whether the specific information is contained on the basis of the position information detected in the detection step.

**17.** The method according to claim 16, characterized in that

the detection step comprises detecting the information related to the position using position detection image data obtained by decreasing resolution of the image data, and
the determination step comprises determining presence/absence of the specific information from the image data.

**18.** The method according to claim 14, characterized by further comprising the image read step (S701, S201) of generating the image data.

**19.** The method according to claim 14, characterized in that the image data is image data for printing.

**20.** The method according to claim 19, characterized by further comprising the image formation step (S706, S209) of printing the image data.

**21.** The method according to claim 14, characterized in that the image processing step comprises executing processing (S705) of converting density or brightness of the image data as the predetermined processing.

**22.** The method according to claim 14, characterized in that the image processing step comprises erasing (S301) the image data as the predetermined processing.

**23.** The method according to claim 14, characterized in that the block has the same size as that of a block having a predetermined size as a unit of image data transfer.

**24.** The method according to claim 23, characterized in that the determination step comprises the detection step of detecting, from entire image data, position information related to a position where the specific information is contained, and comprises specifying at least the one block from the image data on the basis of the position information detected in the detection step and determining for at least the one block whether the specific information is contained.

**25.** The method according to claim 14, characterized in that the block is a band obtained by segmenting the image data along a direction of a line of pixels.

**26.** The method according to claim 25, characterized in that the band is a block obtained by segmenting the image data at a line having uniform color and density.

**27.** A computer program executed by a computer to perform image processing, characterized by comprising:

a program code of the determination step of determining whether image data contains specific information for at least one block extracted from the image data; and
a program code of the image processing step of executing predetermined processing for the image data which is determined in the determination step to contain the specific information.

**28.** The program according to claim 27, characterized in that the specific information is predetermined image data, and the program code of the determination step comprises performing the determination on the basis of at least the one block and the predetermined image data.

29. The program according to claim 28, characterized in that the determination step comprises a program code of the detection step of detecting, from entire image data, position information related to a position where the specific information is contained and comprises determining whether the specific information is contained on the basis of the position information detected by the program code of the detection step.

30. The program according to claim 29, characterized in that

the program code of the detection step comprises detecting the information related to the position using position detection image data obtained by decreasing resolution of the image data, and
the program code of the determination step comprises determining presence/absence of the specific information from the image data.

31. The program according to claim 27, characterized by further comprising a program code of the image read-step of generating the image data.

32. The program according to claim 27, characterized in that the image data is image data for printing.

33. The program according to claim 32, characterized by further comprising a program code of the image formation step of printing the image data.

34. The program according to claim 27, characterized in that the program code of the image processing step comprises executing processing of converting density or brightness of the image data as the predetermined processing.

35. The program according to claim 27, characterized in that the program code of the image processing step comprises erasing the image data as the predetermined processing.

36. The program according to claim 27, characterized in that the block has the same size as that of a block having a predetermined size as a unit of image data transfer.

37. The program according to claim 36, characterized in that the program code of the determination step comprises a program code of the detection step of detecting, from entire image data, position information related to a position where the specific information is contained, and comprises specifying at least the one block from the image data on the basis of the position information detected by the program code of the detection step and determining for at least the one block whether the specific information is contained.

38. The program according to claim 27, characterized in that the block is a band obtained by segmenting the image data along a direction of a line of pixels.

39. The program according to claim 38, characterized in that the band is a block obtained by segmenting the image data at a line having uniform color and density.

40. A computer-readable storage medium which stores the computer program of any one of claims 27 to 39.

41. A method of processing image data to prevent the copying of copy-prohibited image data, comprising:

processing data defining an input image to divide the image into a plurality of image parts;
performing processing to test the image parts sequentially to determine whether an image part has characteristics of a copy-prohibited image;
generating a control signal to prevent the output of image data faithfully reproducing the input image in response to the detection of an image part having characteristics of a copy-prohibited image.

42. A storage device storing instructions for causing a programmable processing apparatus to become operable to perform a method as set out in at least one of claims 14 to 26 and 41.

43. A signal conveying instructions for causing a programmable processing apparatus to become operable to perform a method as set out in at least one of claims 14 to 26 and 41.

# FIG. 1

100

101 — CPU

102 — FIRST PACKET CONVERSION SECTION

103 — LAN CONTROLLER

LAN

115

104 — SYSTEM BUS BRIDGE

105 — SECOND PACKET CONVERSION SECTION

106 — SDRAM

107 — HARD DISK CONTROLLER

108 — HDD

109 — RASTER CONVERSION SECTION

110 — SDRAM

111 — SCANNER

112 — SCANNER IMAGE PROCESSING SECTION

113 — PRINTER IMAGE PROCESSING SECTION

114 — PRINTER

EP 1 122 939 A2

# F I G. 2

ONE TILE

10000 ········ 10000

201

ORIGINAL IMAGE

| 0 | 1 | | ········· | 31 |
| 32 | | | | |
| | | | | |
| 992 | | | | 1023 |

202

ONE PIXEL

# F I G. 3

| Header | Image Data |
|---|---|
| 34bit | 5.5KByte(Max) : 32×32 Pixels |

bit [ 0 ]        Packet ID ; 0 : Command, 1 : Image
bit [ 4 : 1 ]      Chip ID (DESTINATION)
bit [ 6 : 5 ]      Data Type ; 0 : B/W, 1 : Color RGB, 2 : Color CMYK
bit [19 : 7 ]      X - coordinate
bit [ 33 : 20 ]    Y - coordinate

# FIG. 4

Image Data

Color RGB

| R Length | R Data | G Length | G Data | B Length | B Data | ~ 401 |
|---|---|---|---|---|---|---|
| 3bit | 8bit (MAX) | 3bit | 8bit (MAX) | 3bit | 8bit (MAX) | |

←――――――――――――――― 1 Pixel ――――――――――――――――→

Color CMYK

| C Length | C Data | M Length | M Data | Y Length | Y Data | K Length | K Data | ~ 402 |
|---|---|---|---|---|---|---|---|---|
| 3bit | 8bit (MAX) | 3bit | 8bit (MAX) | 3bit | 8bit (MAX) | 3bit | 8bit (MAX) | |

←――――――――――――――― 1 Pixel ――――――――――――――――→

EP 1 122 939 A2

# F I G. 5

| Header | Command Data |
|---|---|
| 34bit | 128Byte(Max) |

bit [ 0 ]        Packet ID ; 0 : Command, 1 : Image

bit [ 4 : 1 ]     Chip ID (   )

bit [ 5 ]        Command Type ; 0 : Write, 1 : Read

bit [ 9 : 6 ]     Command Number

bit [ 33 : 10 ]  0

# FIG. 6

Command Data

| Address - 0 | Data - 0 | Address - 1 | Data - 1 | ·········· | Address - 15 | Data - 15 |
|---|---|---|---|---|---|---|

←— 4Byte —→ ←— 4Byte —→

←——— 1 Command ———→

EP 1 122 939 A2

# F I G. 7

```
              ┌─────────────┐
              │    START    │
              └──────┬──────┘
                     │
        ┌────────────▼────────────┐
        │     START  SCANNING     │──── S701
        └────────────┬────────────┘
                     │
        ┌────────────▼────────────┐
        │ WRITE IMAGE IN MEMORY/HDD│──── S702
        └────────────┬────────────┘
                     │
        ┌────────────▼────────────┐
        │ EXTRACT DIGITAL WATERMARK│──── S703
        └────────────┬────────────┘
                     │
  S704        ╱──────▼──────╲          YES
        ╱───────────────────────╲──────────────┐
        ╲    IMAGE  TO  BE       ╱              │
        ╲   COPY-PROTECTED?     ╱               │
         ╲─────────┬─────────╱         S705     │
                   │NO                          │
                                ┌───────────────▼──────────┐
                                │ PERFORM FORGERY PREVENTION│
                                │  CONTROL  PROCESSING      │
                                └───────────────┬──────────┘
                   │◄───────────────────────────┘
                   │
        ┌──────────▼──────────────┐
        │     START  PRINTING     │──── S706
        └──────────┬──────────────┘
                   │
              ┌────▼────┐
              │   END   │
              └─────────┘
```

26

# F I G. 8A

ORIGINAL IMAGE

# F I G. 8B

AFTER PROCESSING

# FIG. 9

IMAGE DATA (Green)

255

I  ORIGINAL IMAGE

II  AFTER PROCESSING

0

SCANNING POSITION

EP 1 122 939 A2

# F I G. 10

WARNING : COPY OF THIS IMAGE IS
INHIBITED BY LAW

DO YOU REALLY WANT TO PROCESS THIS IMAGE?

(THIS IMAGE HAS ALREADY BEEN PROCESSED)

| YES | NO |

BT1          BT2

# F I G. 11

LOG INFORMATION

| | |
|---|---|
| TIME | : 1999/11/15 10 : 00 |
| TYPE OF IMAGE TO BE COPY-PROTECTED | : BANK NOTE |
| ISSUE COUNTRY | : Japan |
| ISSUE NUMBER | : A123456B |
| VALUE INFORMATION | : ¥ 10000 |

# F I G. 12

```
        ┌─────────────┐
        │    START    │
        └─────────────┘
               │
               ▼
   ┌───────────────────────────┐
   │ PROCESS  IMAGE  ON  MEMORY│────  S601
   └───────────────────────────┘
               │
               ▼
   ┌───────────────────────────┐
   │ DISPLAY  WARNING  DIALOGUE│────  S602
   └───────────────────────────┘
               │
               ▼
S603          ◇
      ╱               ╲
    ╱  INPUT  MESSAGE?  ╲      NO
    ╲                   ╱──────────────┐        S604
      ╲               ╱                │
          YES                          ▼
           │                ┌───────────────────────────┐
           │                │  RELEASE  IMAGE  MEMORY   │
           │                └───────────────────────────┘
           │                              │
           │◄─────────────────────────────┘
           ▼
        ┌─────────────┐
        │     END     │
        └─────────────┘
```

# FIG. 13

IMAGE DATA
(Yellow)

255

1301 AFTER PROCESSING

1302 ORIGINAL IMAGE

0

SCANNING POSITION

EP 1 122 939 A2

# F I G.  14

```
        ┌─────────────────────┐
        │    EXTRACTION  OF    │
        │  DIGITAL  WATERMARK  │
        └─────────────────────┘
                   │
                   ▼
   ┌───────────────────────────────┐
   │   SEGMENT  LOW-RESOLUTION      │ ∼S1401
   │   IMAGE  DATA  INTO  BLOCKS    │
   └───────────────────────────────┘
                   │
                   ▼
   ┌───────────────────────────────┐
   │   CONVERT  EACH  BLOCK  INTO   │ ∼S1403
   │   SPACE  FREQUENCY  DOMAIN     │
   └───────────────────────────────┘
                   │
                   ▼
   ┌───────────────────────────────┐
   │   DETECT  REGISTRATION  SIGNAL │ ∼S1405
   └───────────────────────────────┘
                   │
                   ▼
   ┌───────────────────────────────┐
   │   DETERMINE  POSITION  AND     │ ∼S1407
   │   SIZE  OF  DIGITAL  WATERMARK │
   └───────────────────────────────┘
                   │
                   ▼
   ┌───────────────────────────────┐
   │ EXTRACT  TILE  (PACKET)  FROM  │ ∼S1409
   │ HIGH-RESOLUTION  IMAGE  DATA ON│
   │ THE  BASIS  OF  DETERMINED  POSITION│
   │ AND  SIZE  OF  DIGITAL  WATERMARK│
   └───────────────────────────────┘
                   │
                   ▼
   ┌───────────────────────────────┐
   │ EXTRACT  DIGITAL  WATERMARK FROM│ ∼S1411
   │ IMAGE  CONTAINED  IN  EXTRACTED TILE│
   │ (PACKET)                       │
   └───────────────────────────────┘
                   │
                   ▼
        ┌─────────────────────┐
        │         END         │
        └─────────────────────┘
```

# F I G. 15

EP 1 122 939 A2

# F I G. 16

START

READ IMAGE — S201

COMPRESS READ IMAGE — S202

STORE COMPRESSED IMAGE IN STORAGE DEVICE — S203

READ COMPRESSED BAND IMAGE — S204

EXPAND COMPRESSED BAND IMAGE — S205

STORE EXPANDED BAND IMAGE IN STORAGE DEVICE — S206

READ IMAGE — S207

S208 SPECIFIC IMAGE? — YES

NO

PRINT READ IMAGE — S209

S210 FINAL BAND? — NO

YES

S211 DOCUMENT IMAGE? — YES

NO

END

# FIG. 17

SET VALUE A, B, AND C

1511

FROM INPUT/OUTPUT
CONTROL CIRCUIT 1507 → [151 DETERMINATION ROM] —X(i)→ [152 INTEGRATOR] —Y(i)→ [153 DETERMINATION CIRCUIT] → TO SYSTEM CONTROL CIRCUIT 1512

[154 MEMORY]

EP 1 122 939 A2

# F I G. 18

```
                    ┌─────────┐
                    │  START  │
                    └────┬────┘
                         │
         ┌───────────────▼───────────────┐
         │         BITMAP PDL            │──── S401
         └───────────────┬───────────────┘
                         │
         ┌───────────────▼───────────────┐
         │    COMPRESS BITMAP IMAGE      │──── S402
         └───────────────┬───────────────┘
                         │
         ┌───────────────▼───────────────┐
         │   STORE COMPRESSED IMAGE      │──── S403
         │      IN STORAGE DEVICE        │
         └───────────────┬───────────────┘
                         │
         ┌───────────────▼───────────────┐
         │   READ COMPRESSED BAND IMAGE  │──── S404
         └───────────────┬───────────────┘
                         │
         ┌───────────────▼───────────────┐
         │  EXPAND COMPRESSED BAND IMAGE │──── S405
         └───────────────┬───────────────┘
                         │
         ┌───────────────▼───────────────┐
         │  STORE EXPANDED BAND IMAGE    │──── S406
         │      IN STORAGE DEVICE        │
         └───────────────┬───────────────┘
                         │
         ┌───────────────▼───────────────┐
         │         READ IMAGE           │──── S407
         └───────────────┬───────────────┘
                         │
S208                     ▼
         ◇─────── SPECIFIC IMAGE? ───────◇ YES
                         │ NO
         ┌───────────────▼───────────────┐
         │       PRINT READ IMAGE        │──── S209
         └───────────────┬───────────────┘
                         │
    NO                   ▼              S210
         ◇──────── FINAL BAND? ──────────◇
                         │ YES
    YES                  ▼              S408
         ◇──────── PDL IMAGE? ───────────◇
                         │ NO
                    ┌────▼────┐
                    │   END   │
                    └─────────┘
```

EP 1 122 939 A2

# F I G.  19

# F I G.   20

EP 1 122 939 A2

# FIG. 21

1700
INTERFACE

1701
MPU

1704
G.A.

1702
ROM

1703
DRAM

1705
HEAD DRIVER

1708
PRINTHEAD

1706
MOTOR DRIVER

1709
CONVEY MOTOR

1707
MOTOR DRIVER

1710
CARRIER MOTOR

# F I G. 22

800

807 — SCANNER

801 — CPU

808 — HD, MO

802 — ROM

809 — FLOPPY DISK DRIVE

803 — RAM

804 — CONTROL PROGRAM

810 — VRAM

805 — BUFFER AREA

806 — OS

811 — DISPLAY DEVICE

812 — KEYBOARD

813 — POINTING DEVICE

814 — PRINTER

815 — INTERFACE CIRCUIT

816

EP 1 122 939 A2

# F I G. 23

START

READ IMAGE — S201

COMPRESS READ IMAGE — S202

STORE COMPRESSED IMAGE IN STORAGE DEVICE — S203

READ COMPRESSED BAND IMAGE — S204

EXPAND COMPRESSED BAND IMAGE — S205

STORE EXPANDED BAND IMAGE IN STORAGE DEVICE — S206

READ IMAGE — S207

S208 — SPECIFIC IMAGE? — YES

S301

NO

S209 — PRINT READ IMAGE

ERASE STORED IMAGE

S210

NO — FINAL BAND?

YES

S211

YES — DOCUMENT IMAGE?

NO

END

# FIG. 24

START

BITMAP PDL — S401

COMPRESS BITMAP IMAGE — S402

STORE COMPRESSED IMAGE IN STORAGE DEVICE — S403

READ COMPRESSED BAND IMAGE — S404

EXPAND COMPRESSED BAND IMAGE — S405

STORE EXPANDED BAND IMAGE IN STORAGE DEVICE — S406

READ IMAGE — S407

S208 SPECIFIC IMAGE? — YES

S209 NO — PRINT READ IMAGE

S301 ERASE STORED IMAGE

S210 FINAL BAND? — NO / YES

S408 PDL IMAGE? — YES / NO

END

# FIG. 25

DETERMINATION OF
SPECIFIC IMAGE

NO ← FIRST TIME? ～ S1101

YES

CONVERT RESOLUTION
(THINNING) ～ S1102

DETERMINE ～ S1103

S1104

TO S211 ← YES   SPECIFIC IMAGE?   NONCONCLUSIVE

NO

TO S209